# EUROPEAN PATENT SPECIFICATION

(11) **EP 4 277 436 B1**
(45) Date of publication and mention of the grant of the patent: **26.11.2025**
(21) Application number: 21916779.8
(22) Date of filing: 07.01.2021
(51) Int. Cl.: H04W 88/06, H04W 8/20

(54) **CAPABILITY SENDING METHOD AND APPARATUS, AND CAPABILITY RECEIVING METHOD AND APPARATUS**
VERFAHREN UND VORRICHTUNG ZUM SENDEN VON FÄHIGKEITEN UND VERFAHREN UND VORRICHTUNG ZUM EMPFANGEN VON KAPAZITÄTEN
PROCÉDÉ ET APPAREIL D'ENVOI DE CAPACITÉ, AINSI QUE PROCÉDÉ ET APPAREIL DE RÉCEPTION DE CAPACITÉ

(43) Date of publication of application: 15.11.2023
(73) Proprietor: Beijing Xiaomi Mobile Software Co., Ltd., Beijing 100085 (CN)
(72) Inventor: HONG, Wei, Beijing 100085 (CN); ZHANG, Ming, Beijing 100085 (CN)
(74) Representative: Gunzelmann, Rainer
(86) International application number: PCT/CN2021/070680
(87) International publication number: WO 2022/147721

(56) References cited:
- EP-A1- 2 882 226
- CN-A- 101 951 653
- CN-A- 103 582 040
- CN-A- 104 144 406
- CN-A- 111 698 775
- US-A1- 2015 038 154
- XIAOMI: "General consideration for solving MUSIM problems", vol. RAN WG2, no. E-Meeting; 20200817 - 20200828, 7 August 2020 (2020-08-07), XP051912573, Retrieved from the Internet <URL:https://ftp.3gpp.org/tsg_ran/WG2_RL2/TSGR2_111-e/Docs/R2-2007952.zip R2-2007952_General consideration for solving MUSIM problems.docx> [retrieved on 20200807]
- APPLE INC: "Methods for Multi-SIM IDLE/INACTIVE mode Page Collision Avoidance", vol. RAN WG2, no. Electronic, 23 October 2020 (2020-10-23), XP052362557, Retrieved from the Internet <URL:https://ftp.3gpp.org/tsg_ran/WG2_RL2/TSGR2_112-e/Docs/R2-2009505.zip R2-2009505_MUSIM_Page_Collision_Avoidance.docx> [retrieved on 20201023]

## Description

### TECHNICAL FIELD

The present disclosure relates to the field of communication technologies, in particular to, a method for sending a capability, a method for receiving a capability, a method for sending a problem, an apparatus for sending a capability, an apparatus for receiving a capability, an apparatus for sending a problem, an electronic device and a computer-readable storage medium.

### BACKGROUND

A multi-card terminal may be provided with a plurality of SIM (subscriber identity module) cards. The terminal may communicate through the plurality of SIM cards. However, during a process of communication, a communication conflict problem may occur between the plurality of SIM cards, affecting a communication effect of the terminal. In this regard, the communication conflict problem may be resolved by a base station.

There are following documents to be relevant:
XIAOMI: "General consideration for solving MUSIM problems", 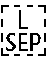 3GPP DRAFT; R2-2007952, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE. APPLE INC: "Methods for Multi-SIM IDLE/INACTIVE mode Page Collision Avoidance", 3GPP DRAFT; R2-2009505, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE.

### SUMMARY

In view of this, embodiments of the present disclosure provide a method for sending a capability, a method for receiving a capability, a method for sending a problem, an apparatus for sending a capability, an apparatus for receiving a capability, an apparatus for sending a problem, an electronic device and a computer-readable storage medium, to solve overcome the problems in the related art.

According to a first aspect of an embodiment of the present disclosure, there is provided a method for sending a capability, performed by a first base station. The method includes:
sending a first capability information to a second base station, in which, the first capability information is configured to indicate a capability of solving a multi-card communication conflict problem in a terminal by the first base station and/or a neighboring base station of the first base station.

According to a second aspect of an embodiment of the present disclosure, there is provided a method for receiving a capability, performed by a second base station. The method includes:
receiving first capability information sent by a first base station; and
determining a capability of solving a multi-card communication conflict problem in a terminal by the first base station and/or a neighboring base station of the first base station based on the first capability information, in which, the first capability information is configured to indicate a capability of solving a multi-card communication conflict problem in a terminal by the first base station and/or a neighboring base station of the first base station.

According to a third aspect of a non-claimed embodiment of the present disclosure, there is provided a method for sending a problem, performed by a terminal. The method includes:
sending a multi-card communication conflict problem to a second base station in response to having the multi-card communication conflict problem;
in which, the multi-card communication conflict problem is configured for the second base station to determine whether to receive first capability information sent by a first base station, and the first capability information is configured to indicate a capability of solving a multi-card communication conflict problem in a terminal by the first base station and/or a neighboring base station of the first base station.

According to a fourth aspect of an embodiment of the present disclosure, there is provided an apparatus for capability sending, applicable for a first base station. The apparatus includes:
a capability sending module, configured to send a first capability information to a second base station, in which, the first capability information is configured to indicate a capability of solving a multi-card communication conflict problem in a terminal by the first base station and/or a neighboring base station of the first base station.

According to a fifth aspect of an embodiment of the present disclosure, there is provided an apparatus for receiving a capability, applicable for a second base station. The apparatus includes:
a capability reception module, configured to receive first capability information sent by a first base station; and
a capability determination module, configured to determine a capability of solving a multi-card communication conflict problem in a terminal by the first base station and/or a neighboring base station of the first base station based on the first capability information, in which, the first capability information is configured to indicate a capability of solving a multi-card communication conflict problem in a terminal by the first base station and/or a neighboring base station of the first base station.

According to a sixth aspect of a non-claimed embodiment of the present disclosure, there is provided an apparatus for sending a problem, applicable for a terminal. The apparatus includes:
a problem sending module, configured to send a multi-card communication conflict problem to a second base station in response to having the multi-card communication conflict problem;
in which, the multi-card communication conflict problem is configured for the second base station to determine whether to receive first capability information sent by a first base station, and the first capability information is configured to indicate a capability of solving a multi-card communication conflict problem in a terminal by the first base station and/or a neighboring base station of the first base station.

According to a seventh aspect of a non-claimed embodiment of the present disclosure, there is provided an electronic device. The electronic device includes:
a processor; and
a memory, configured to store instructions executable by the processor;
in which, the processor is configured to perform the method for sending the capability, and/or the method for receiving the capability as described above.

According to an eighth aspect of a non-claimed embodiment of the present disclosure, there is provided a computer-readable storage medium having a computer program stored thereon. The computer program is caused to implement a step of the method for sending a capability, and/or the method for receiving the capability as described above when executed by a processor.

According to a ninth aspect of a non-claimed embodiment of the present disclosure, there is provided an electronic device. The electronic device includes:
a processor; and
a memory, configured to store instructions executable by the processor;
in which, the processor is configured to perform the method for sending the problem as described above.

According to a tenth aspect of an embodiment of the present disclosure, there is provided a non-claimed computer-readable storage medium having a computer program stored thereon. The computer program is caused to implement a step of the method for sending the problem as described above when executed by a processor.

According to an embodiment of the present disclosure, the first base station may determine the capability of solving the multi-card communication conflict problem in the terminal by itself, and may also determine the capability of solving the multi-card communication conflict problem in the terminal by the neighboring base station, such as obtaining the capability of solving the multi-card communication conflict problem in the terminal by the neighboring base station through communication with the neighboring base station. Thus, the first capability information may be generated based on the capability of solving the multi-card communication conflict problem in the terminal by itself and/or the capability of solving the multi-card communication conflict problem in the terminal by the neighboring base station, and then sent to the second base station.

Based on this, it is possible to enable the second base station to determine the capability of solving the multi-card communication conflict problem in the terminal by the first base station, and/or to enable the second base station to determine the capability of solving the multi-card communication conflict problem in the terminal by the neighboring base station of the first base station, so that the second base station may be in coordination with the first base station and/or the neighboring base station of the first base station to more comprehensively solve the communication conflict problem for the terminal.

### BRIEF DESCRIPTION OF THE DRAWINGS

In order to more clearly describe the technical solutions in embodiments of the present disclosure, the following briefly introduces the accompanying drawings required for describing the embodiments. Obviously, the accompanying drawings in the following description are only embodiments of the present disclosure. Other drawings can be obtained based on these drawings, for those skilled in the art, without inventive labor.
FIG. 1 is a flowchart illustrating a method for sending a capability according to an embodiment of the present disclosure.
FIG. 2 is a flowchart illustrating another method for sending a capability according to an embodiment of the present disclosure.
FIG. 3 is a flowchart illustrating yet another method for sending a capability according to an embodiment of the present disclosure.
FIG. 4 is a flowchart illustrating yet another method for sending a capability according to an embodiment of the present disclosure.
FIG. 5 is a flowchart illustrating yet another method for sending a capability according to an embodiment of the present disclosure.
FIG. 6 is a flowchart illustrating yet another method for sending a capability according to an embodiment of the present disclosure.
FIG. 7 is a flowchart illustrating a method for receiving a capability according to an embodiment of the present disclosure.
FIG. 8 is a flowchart illustrating another method for receiving a capability according to an embodiment of the present disclosure.
FIG. 9 is a flowchart illustrating yet another method for receiving a capability according to an embodiment of the present disclosure.
FIG. 10 is a flowchart illustrating yet another method for receiving a capability according to an embodiment of the present disclosure.
FIG. 11 is a flowchart illustrating yet another method for receiving a capability according to an embodiment of the present disclosure.
FIG. 12 is a flowchart illustrating yet another method for receiving a capability according to an embodiment of the present disclosure.
FIG. 13 is a block diagram illustrating an apparatus for sending a capability according to an embodiment of the present disclosure.
FIG. 14 is a block diagram illustrating another apparatus for sending a capability according to an embodiment of the present disclosure.
FIG. 15 is a block diagram illustrating yet another apparatus for sending a capability according to an embodiment of the present disclosure.
FIG. 16 is a block diagram illustrating an apparatus for receiving a capability according to an embodiment of the present disclosure.
FIG. 17 is a block diagram illustrating another apparatus for receiving a capability according to an embodiment of the present disclosure.
FIG. 18 is a block diagram illustrating yet another apparatus for receiving a capability according to an embodiment of the present disclosure.
FIG. 19 is a block diagram illustrating yet another apparatus for receiving a capability according to an embodiment of the present disclosure.
FIG. 20 is a block diagram illustrating yet another apparatus for receiving a capability according to an embodiment of the present disclosure.
FIG. 21 is a block diagram illustrating a device applicable for sending a capability and/or receiving a capability according to an embodiment of the present disclosure.
FIG. 22 is a block diagram illustrating a device applicable for sending a problem according to an embodiment of the present disclosure.

### DETAILED DESCRIPTION

Reference will be made clearly and completely in the technical solution of the embodiments of the disclosure with the accompanying drawings. Obviously, the embodiments described here are only part of the embodiments of the disclosure and are not all embodiments of the disclosure. Based on the embodiments of the disclosure, other embodiments obtained by those skilled in the art without inventive works are within the scope of the disclosure.

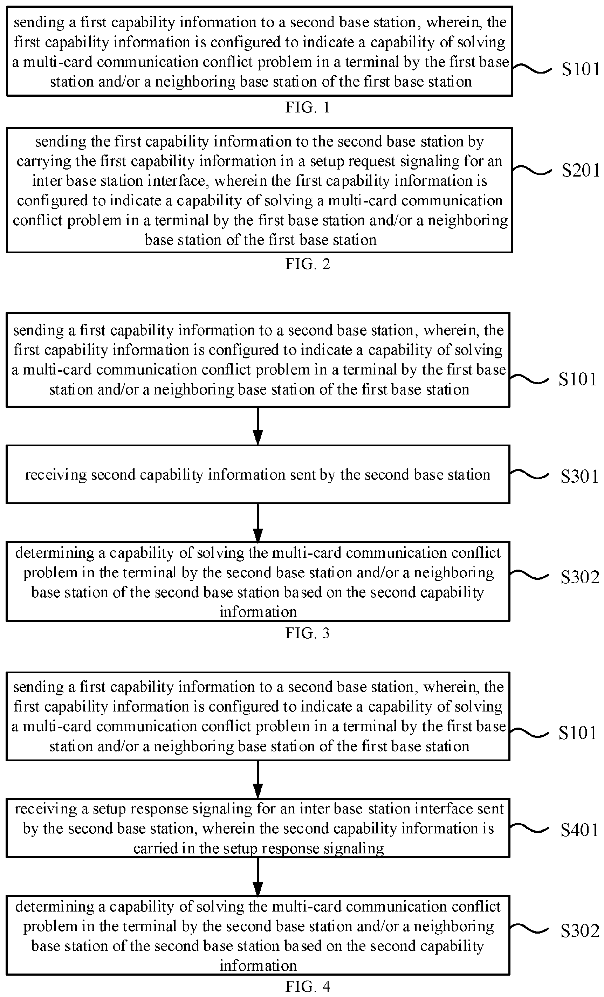

FIG. 1 is a flowchart illustrating a method for sending a capability according to an embodiment of the present disclosure. The method for sending the capability as illustrated in this embodiment may be applicable for a first base station. The first base station may communicate with a terminal. The terminal includes, but is not limited to, a mobile phone, a tablet, a wearable device, a sensor, an Internet-of-Things device, and other electronic devices. The base station includes, but is not limited to, a 4G (4th generation) base station, a 5G (5th generation) base station, and a 6G (6th generation) base station.

In an embodiment, the first base station may communicate with a second base station. The second base station may be a second base station to which a method for receiving a capability described in any subsequent embodiment is applicable.

As illustrated in FIG. 1, the method for sending the capability may include the following step.

At step S101, a first capability information is sent to a second base station, in which, the first capability information is configured to indicate a capability of solving a multi-card communication conflict problem in a terminal by the first base station and/or a neighboring base station of the first base station.

In an embodiment, the first base station may determine the capability of solving the multi-card communication conflict problem in the terminal by itself, and may also determine the capability of solving the multi-card communication conflict problem in the terminal by the neighboring base station, such as obtaining the capability of solving the multi-card communication conflict problem in the terminal by the neighboring base station through communication with the neighboring base station. Thus, the first capability information may be generated based on the capability of solving the multi-card communication conflict problem in the terminal by itself and/or the capability of solving the multi-card communication conflict problem in the terminal by the neighboring base station, and then sent to the second base station.

Based on this, it is possible to enable the second base station to determine the capability of solving the multi-card communication conflict problem in the terminal by the first base station, and/or to enable the second base station to determine the capability of solving the multi-card communication conflict problem in the terminal by the neighboring base station of the first base station, so that the second base station may be in coordination with the first base station and/or the neighboring base station of the first base station to more comprehensively solve the communication conflict problem for the terminal.

In an embodiment, the terminal may be provided with a plurality of SIM cards. The SIM cards may be traditional SIM cards or eSIM cards, i.e. embedded SIM cards. The plurality of SIM cards may belong to a same operator network or different operator networks.

During a process of using the plurality of SIM cards, a communication conflict problem may occur between the plurality of SIM cards in the terminal. The terminal may send the communication conflict problem to a base station, such that the based station determines a solution. The multi-card communication conflict problem may refer to a problem caused by a communication conflict between two or more SIM cards. The following is an illustrative explanation mainly under a case that the plurality of SIM cards include a first SIM card and a second SIM card, and the first capability information is configured to indicate a capability of solving a multi-card communication conflict problem in a terminal by the first base station.

It is noted that the first SIM card and the second SIM card refer to any two different SIM cards in the terminal in general, rather than specifically referring to certain two SIM cards in the terminal.

In an embodiment, the capability of solving the multi-card communication conflict problem in the terminal includes one of:
being able to solve the multi-card communication conflict problem in the terminal, or being unable to solve the multi-card communication conflict problem in the terminal.

In an embodiment, capabilities of solving the multi-card communication conflict problem by different base stations may be different. Roughly, capabilities of solving the communication conflict problem may be classified into being able to solve the communication conflict problem and being unable to solve the communication conflict problem. Specifically, the capability of solving the communication conflict problem may be specific to a manner to solve the communication conflict problem, or a type of the communication conflict problem that can be solved, etc.

In an embodiment, for example, the first base station is able to solve the multi-card communication conflict problem, while the second base station is unable to solve the multi-card communication conflict problem.

The second base station may determine that the first base station is able to solve the multi-card communication conflict problem based on the first capability information. Therefore, when the terminal communicating with the second base station is required to solve the multi-card communication conflict problem, the second base station may send the multi-card communication conflict problem to be solved by the terminal to the first base station, such that the first base station determines the solution, and then obtains the solution and sends the solution to the terminal. Thus, the second base station may be in coordination with the first base station to solve the communication conflict problem for the terminal.

In an embodiment, in response to the capability of solving the multi-card communication conflict problem in the terminal including being able to solve the multi-card communication conflict problem in the terminal, the first capability information is further configured to indicate a manner to solve the multi-card communication conflict problem in the terminal by the first base station and/or the neighboring base station of the first base station.

In an embodiment, the manner includes at least one of:
changing a user equipment identifier of a subscriber identity module (SIM) card, providing an offset corresponding to the user equipment identifier of the SIM card, changing an algorithm for determining a paging occasion based on the user equipment identifier of the SIM card, providing a paging reason, or allowing the SIM card to be temporarily disconnected (for example, allowing the SIM card to be temporarily disconnected from a wireless resource control layer of a current base station).

In an embodiment, the second base station may also determine the manner to solve the multi-card communication conflict problem by the first base station based on the first capability information. Therefore, when the terminal communicating with the second base station is required to solve the multi-card communication conflict problem, the second base station may determine the manner in which the terminal is required to solve the multi-card communication conflict problem and determine whether the manner in which the terminal is required to solve the multi card communication conflict problem belongs to the manner that the second base station can solve the multi-card communication conflict. In case of not belonging to the manner that the second base station can solve the multi-card communication conflict problem, the second base station may further determine whether the manner in which the terminal is required to solve the multi card communication conflict problem belongs to the manner that the first base station can solve the multi-card communication conflict problem. In case of belonging to the manner that the first base station can solve the multi-card communication conflict problem, the second base station may send the multi-card communication conflict problem to be solved by the terminal to the first base station, and the first base station may determine the solution in a corresponding manner.

For example, the first base station is able to solve the multi-card communication conflict problem. Specific manners to solve the multi-card communication conflict problems include changing the user equipment identifier of the SIM card, providing the offset corresponding to the user equipment identifier of the SIM card, changing the algorithm for determining the paging occasion based on the user equipment identifier of the SIM card.

The second base station is also able to solve the multi-card communication conflict problem. Specific manners to solve the multi-card communication conflict problems include providing the paging reason, or allowing the SIM card to be temporarily disconnected.

For example, the manner in which the terminal is required to solve the multi-card communication conflict problem is changing the user equipment identifier of the SIM card. The terminal may report the manner to solve the multi-card communication conflict problem to the second base station through auxiliary information. The second base station may determine that the second base station itself is unable to solve the multi-card communication conflict problem in this manner, but the first base station is able to solve the multi-card communication conflict problem in this manner. Thus, the second base station may send the multi-card communication conflict problem to be solved by the terminal to the first base station, and the first base station determines the solution in the manner of changing the user equipment identifier of the SIM card, and then obtains the solution and send the solution to the terminal. Therefore, the second base station may be in coordination with the first base station to solve the communication conflict problem in the manner required by the terminal.

In an embodiment, in response to the capability of solving the multi-card communication conflict problem in the terminal including being able to solve the multi-card communication conflict problem in the terminal, the first capability information is further configured to indicate a type of the multi-card communication conflict problem in the terminal which can be solved by the first base station and/or the neighboring base station of the first base station.

In an embodiment, the type includes at least one of:
a conflict between a first SIM card monitoring a paging message and a second SIM card monitoring a paging message in the terminal;
a conflict between a first SIM card performing a communication operation and the second SIM card monitoring a paging message in the terminal;
a conflict between the first SIM card performing a communication operation and a second SIM card responding to a paging message in the terminal;
a conflict between the first SIM card performing a communication operation and a second SIM card measuring a signal in the terminal;
a conflict between the first SIM card performing a communication operation and a second SIM card receiving system information in the terminal; or
a conflict between the first SIM card performing a communication operation and a second SIM card updating a tracking area in the terminal.

In an embodiment, the second base station may also the type of the multi-card communication conflict problem which can be solved by the first base station based on the first capability information. Therefore, when the terminal communicating with the second base station is required to solve the multi-card communication conflict problem, the second base station may determine the type of the multi-card communication conflict problem to be solved by the terminal, and determine whether the type of the multi-card communication conflict problem to be solved by the terminal belongs to a type of the multi-card communication conflict problem which can be solved by the second base station. In case of not belonging to the type of the multi-card communication conflict problem which can be solved by the second base station, the second base station may further determine whether the type of the multi-card communication conflict problem to be solved by the terminal belongs to the type of the multi-card communication conflict problem which can be solved by the first base station. In case of belonging to the type of the multi-card communication conflict problem which can be solved by the first base station, the second base station may send the multi-card communication conflict problem to be solved by the terminal to the first base station, and the first base station may determine the solution.

For example, the first base station may be able to solve the multi-card communication conflict problem. Specific types of the multi-card communication conflict problems which can be solved include the conflict between the first SIM card monitoring the paging message and the second SIM card monitoring the paging message in the terminal; the conflict between the first SIM card performing the communication operation and the second SIM card monitoring the paging message in the terminal; and the conflict between the first SIM card performing the communication operation and the second SIM card responding to the paging message in the terminal.

The second base station may also be able to solve the multi-card communication conflict problem. Specific types of the multi-card communication conflict problems which can be solved include the conflict between the first SIM card performing the communication operation and the second SIM card measuring the signal in the terminal; the conflict between the first SIM card performing the communication operation and the second SIM card receiving the system information in the terminal; or the conflict between the first SIM card performing the communication operation and the second SIM card updating the tracking area in the terminal.

For example, the type of the multi-card communication conflict problem to be solved by the terminal is the conflict between the first SIM card monitoring the paging message and the second SIM card monitoring the paging message in the terminal. The second base station may determine that the second base station itself is unable to solve this type of multi-card communication conflict problem, but the first base station is able to solve this type of multi-card communication conflict problem. Thus, the second base station may send the multi-card communication conflict problem to be solved by the terminal to the first base station, and the first base station determines the solution, and then obtains the solution and send the solution to the terminal. Therefore, the second base station may be in coordination with the first base station to solve the communication conflict problem for the terminal.

FIG. 2 is a flowchart illustrating another method for sending a capability according to an embodiment of the present disclosure. As illustrated in FIG. 2, in some embodiments, sending the first capability information to the second base station includes the following step.

At step S201, the first capability information is sent to the second base station by carrying the first capability information in a setup request signaling for an inter base station interface.

In an embodiment, the first base station may send the setup request signaling for the inter base station interface to the second base station, to set up the inter base station interface with the second base station, and may carry the first capability information in the setup request signaling, which may expand functionality of signaling and improving a utilization rate for signaling.

It is noted that the first base station may also send the first capability information to the second base station through the inter base station interface after setting up the inter base station interface with the second base station.

In an embodiment, when the first base station and the second base station both belong to an E-UTRAN (UMTS Terrestrial Radio Access Network), i.e. belong to a 4G LTE (Long Term Evolution) mobile communication network, the inter base station interface is an X2 interface, and the setup request signaling may be an X2 SETUP REQUEST signaling.

For example, as illustrated in underlined terms of Table 1, the first capability information may be added to a Served Cell Information information unit in the X2 SETUP REQUEST signaling, or added to a Neighbor Information information unit, or added to a NR Neighbor Information information unit. Alternatively, a new information unit may be added independently to the X2 SETUP REQUEST signaling, and then the first capability information is added to the new information unit.

**Table 1**

| **IE/Group Name** | | | **Presence** | **Range** | **IE type and reference** | **Semantics description** | **Criticality** | **Assigned Criticality** |
|---|---|---|---|---|---|---|---|---|
| Message Type | | | M | | 9.2.13 | | YES | reject |
| Global eNB ID | | | M | | 9.2.22 | | YES | reject |
| Served Cells | | | | *1* .. *<maxCellineNB>* | | Complete list of cells served by the eNB | YES | reject |
| | >Served Cell Information | | M | | 9.2.8 | | - | |
| | >Neighbour Information | | | *0* .. *<maxnoofNeighb ours>* | | | - | |
| | | >>ECGI | M | | ECGI 9.2.14 | E-UTRAN Cell Global Identifier of the neighbour cell | - | |
| | | >>PCI | M | | INTEGER (0..503, ...) | Physical Cell Identifier of the neighbour cell | - | |
| | | >>EARFCN | M | | 9.2.26 | DL EARFCN for FDD or EARFCN for TDD | - | |
| | | >>TAC | O | | OCTET STRING (2) | Tracking Area Code | YES | ignore |
| | | >>EARFCN Extension | O | | 9.2.65 | DL EARFCN for FDD or EARFCN for TDD. If this IE is present, the value signalled in the *EARFCN* IE is ignored. | YES | reject |
| | >NR Neighbour Information | | O | | 9.2.98 | NR neighbour, capable of performing EN-DC with the served E-UTRA cell | YES | ignore |
| GU Group Id List | | | | *0 .. <maxfPools>* | | List of all the pools to which the eNB belongs | GLOBAL | reject |
| | >GU Group Id | | M | | 9.2.20 | | - | |
| LHN ID | | | O | | 9.2.83 | | YES | ignore |

In an embodiment, when the first base station and the second base station both belong to a NR (New Radio) network, i.e. belong to a 5G mobile communication network, the inter base station interface is an Xn interface, and the setup request signaling may be an Xn SETUP REQUEST signaling.

For example, as illustrated in underlined terms of Table 2, the first capability information may be added to a Served Cell Information NR information unit of a List of Served Cells NR information unit in the Xn SETUP REQUEST signaling, or added to a Neighbor Information E-UTRA information unit, or added to a Neighbor Information NR information unit.

For example, as illustrated in underlined terms of Table 2, the first capability information may be added to a Served Cell Information NR information unit of a List of Served Cells E-UTRA information unit in the Xn SETUP REQUEST signaling, or added to a Neighbor Information NR information unit, or added to a Neighbor Information E-UTRA information unit.

**Table 2**

| IE/Group Name | | Presence | Range | IE type and reference | Semantics description | Criticality | Assigned Criticality |
|---|---|---|---|---|---|---|---|
| Message Type | | M | | 9.2.3.1 | | YES | reject |
| Global NG-RAN Node ID | | M | | 9.2.2.3 | | YES | reject |
| TAI Support List | | M | | 9.2.3.20 | List of supported TAs and associated characteristics. | YES | reject |
| AMF Region Information | | M | | 9.2.3.83 | Contains a list of all the AMF Regions to which the NG-RAN node belongs. | YES | reject |
| List of Served Cells NR | | | *0* .. *<maxnoofCellsinN G-RAN node>* | | Contains a list of cells served by the gNB. If a partial list of cells is signalled, it contains at least one cell per carrier configured at the gNB | YES | reject |
| | >Served Cell Information NR | M | | 9.2.2.11 | | - | |
| | >Neighbour Information NR | O | | 9.2.2.13 | | - | |
| | >Neighbour Information E-UTRA | O | | 9.2.2.14 | | - | |
| | >Partial List Indicator | O | | ENUMERAT ED (partial, ...) | Value "partial" indicates that a partial list of cells is included in the *List* of Served *Cells NR* IE | YES | ignore |
| | >Cell and Capacity Assistance Information | O | | 9.2.2.41 | | YES | ignore |
| List of Served Cells E-UTRA | | | 0 .. *<maxnoofCellsinN G-RAN node>* | | Contains a list of cells served by the ng-eNB. If a partial list of cells is signalled, it contains at least one cell per carrier configured at the ng-eNB | YES | reject |
| | >Served Cell Information E-UTRA | M | | 9.2.2.12 | | - | |
| | >Neighbour Information NR | O | | 9.2.2.13 | | - | |
| | >Neighbour Information E-UTRA | O | | 9.2.2.14 | | - | |
| | >Partial List Indicator | O | | ENUMERAT ED (partial, ...) | Value "partial" indicates that a partial list of cells is included in the *List* of Served *Cells E-UTRA* | YES | ignore |
| | >Cell and Capacity Assistance Information | O | | 9.2.2.41 | | YES | ignore |
| Interface Instance Indication | | O | | 9.2.2.39 | | YES | reject |
| TNL Configuration Info | | O | | 9.2.3.96 | | YES | ignore |

Alternatively, a new information unit may be added independently to the Xn SETUP REQUEST signaling, and then the first capability information is added to the new information unit.

FIG. 3 is a flowchart illustrating yet another method for sending a capability according to an embodiment of the present disclosure. As illustrated in FIG. 3, in some embodiments, the method may further include the following steps.

At step S301, second capability information sent by the second base station is received.

At step S302, a capability of solving the multi-card communication conflict problem in the terminal by the second base station and/or a neighboring base station of the second base station is determined based on the second capability information.

In an embodiment, the second base station may determine the capability of solving the multi-card communication conflict problem in the terminal by itself, and may also determine the capability of solving the multi-card communication conflict problem in the terminal by the neighboring base station, such as obtaining the capability of solving the multi-card communication conflict problem in the terminal by the neighboring base station through communication with the neighboring base station. Thus, the second capability information may be generated based on the capability of solving the multi-card communication conflict problem in the terminal by itself and/or the capability of solving the multi-card communication conflict problem in the terminal by the neighboring base station, and then sent to the first base station.

FIG. 4 is a flowchart illustrating yet another method for sending a capability according to an embodiment of the present disclosure. As illustrated in FIG. 4, in some embodiments, receiving the second capability information sent by the second base station includes the following step.

At step S401, a setup response signaling for an inter base station interface sent by the second base station is received, in which the second capability information is carried in the setup response signaling.

In an embodiment, the second base station may send the setup response signaling for the inter base station interface to the first base station (for example, after receiving the setup request signaling in the above embodiment) to inform the first base station whether the inter base station interface has been successfully set up, and the second capability information may be carried in the setup response signaling, which may expand functionality of signaling and improving a utilization rate for signaling.

It is noted that the second base station may also send the second capability information to the first base station through the inter base station interface after setting up the inter base station interface with the first base station.

In an embodiment, when the first base station and the second base station both belong to an E-UTRAN, i.e. belong to a 4G LTE mobile communication network, the inter base station interface is an X2 interface, and the setup response signaling may be an X2 SETUP RESPONSE signaling.

In an embodiment, the first capability information may be added to a Served Cell Information information unit in the X2 SETUP RESPONSE signaling, or added to a Neighbor Information information unit, or added to a NR Neighbor Information information unit. Alternatively, a new information unit may be added independently to the X2 SETUP RESPONSE signaling, and then the first capability information is added to the new information unit.

In an embodiment, when the first base station and the second base station both belong to a NR (New Radio) network, i.e. belong to a 5G mobile communication network, the inter base station interface is an Xn interface, and the setup request signaling may be an Xn SETUP RESPONSE signaling.

For example, the second capability information may be added to a Served Cell Information NR information unit of a List of Served Cells NR information unit in the Xn SETUP RESPONSE signaling, or added to a Neighbor Information E-UTRA information unit, or added to a Neighbor Information NR information unit.

For example, the first capability information may be added to a Served Cell Information NR information unit of a List of Served Cells E-UTRA information unit in the Xn SETUP REQUEST signaling, or added to a Neighbor Information NR information unit, or added to a Neighbor Information E-UTRA information unit.

For example, a new information unit may be added independently to the Xn SETUP RESPONSE signaling, and then the first capability information is added to the new information unit.

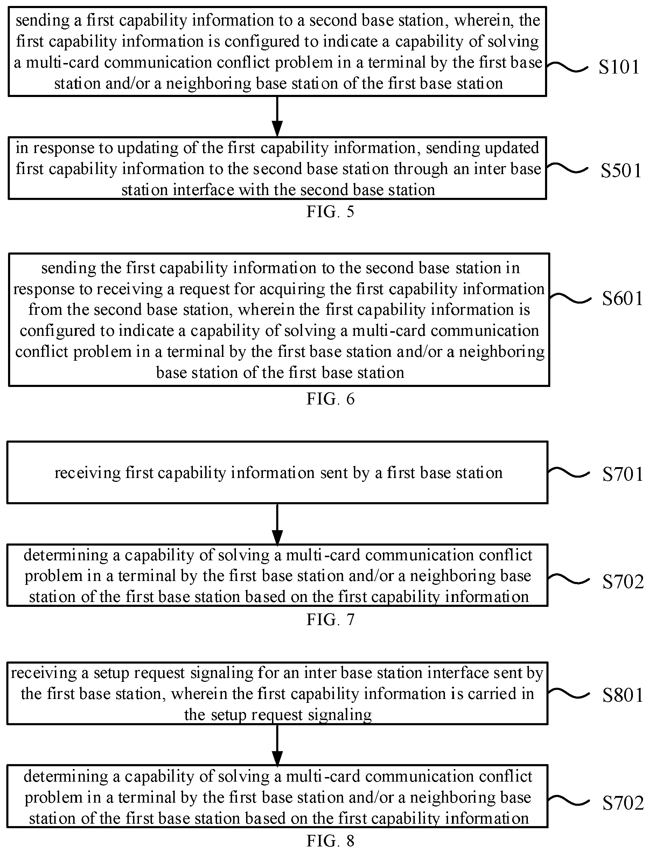

FIG. 5 is a flowchart illustrating yet another method for sending a capability according to an embodiment of the present disclosure. As illustrated in FIG. 5, in some embodiments, the method may further include the following step.

At step S501, in response to updating of the first capability information, updated first capability information is sent to the second base station through an inter base station interface with the second base station.

In an embodiment, the capability of solving the multi-card communication conflict problem by the base station may be changed, such as when the capability of solving the multi-card communication conflict problem by the first base station changes, and/or when the capability of solving the multi-card communication conflict problem by the neighboring base station of the first base station changes, the first capability information may be updated, and then the updated first capability information may be sent to the second base station through the inter base station interface, to enable the second base station to accurately determine a current capability of solving the multi-card communication conflict problem by the first base station and/or the neighboring base station of the first base station.

In an embodiment, when the first base station and the second base station both belong to an E-UTRAN, i.e. belong to a 4G LTE mobile communication network, the inter base station interface is an X2 interface, and the updated first capability information may be carried through an X2AP signaling.

For example, the updated first capability information may be added to an ENB CONFIGURATION UPDATE signaling, specifically to a Served Cells To Add information unit or to a Served Cells To Modify information unit (as illustrated in underlined terms of Table 3).

**Table 3**

| IE/Group Name | | | Presence | Range | IE type and reference | Semantics description | Criticality | Assigned Criticality | |
|---|---|---|---|---|---|---|---|---|---|
| Message Type | | | M | | 9.2.13 | | YES | reject | |
| Served Cells To Add | | | | *0* .. *<maxCellineNB>* | | Complete list of added cells served by the eNB | GLOBAL | reject | |
| | >Served Cell Information | | M | | 9.2.8 | | - | | |
| | >Neighbour Information | | | *0* .. *<maxnoofNeighb ours>* | | | - | | |
| | | >>ECGI | M | | ECGI 9.2.14 | E-UTRAN Cell Global Identifier of the neighbour cell | - | | |
| | | >>PCI | M | | INTEGER (0..503, ...) | Physical Cell Identifier of the neighbour cell | - | | |
| | | >>EARFCN | M | | 9.2.26 | DL EARFCN for FDD or EARFCN for TDD | - | | |
| | | >>TAC | O | | OCTET STRING (2) | Tracking Area Code | YES | ignore | |
| | | >>EARFCN Extension | O | | 9.2.65 | DL EARFCN for FDD or EARFCN for TDD. If this IE is present, the value signalled in the *EARFCN* IE is ignored. | YES | reject | |
| | >NR Neighbour Information | | O | | 9.2.98 | NR neighbour, capable of performing EN-DC with the served E-UTRA cell | YES | ignore | |
| Served Cells To Modify | | | | 0 .. *<maxCellineNB>* | | Complete list of modified cells served by the eNB | GLOBAL | reject | |
| | >Old ECGI | | M | | ECGI 9.2.14 | Old E-UTRAN Cell Global Identifier | - | | |
| | >Served Cell Information | | M | | 9.2.8 | | - | | |
| | >Neighbour Information | | | *0* .. *<maxnoofNeighb ours>* | | | - | | |
| | | >>ECGI | M | | ECGI 9.2.14 | E-UTRAN Cell Global Identifier of the neighbour cell | - | | |
| | | >>PCI | M | | INTEGER (0..503, ...) | Physical Cell Identifier of the neighbour cell | - | | |
| | | >>EARFCN | M | | 9.2.26 | DL EARFCN for FDD or EARFCN for TDD | - | | |
| | | | >>TAC | O | | OCTET STRING (2) | Tracking Area Code | YES | ignore |
| | | | >>EARFCN Extension | O | | 9.2.65 | DL EARFCN for FDD or EARFCN for TDD. If this IE is present, the value signalled in the *EARFCN* IE is ignored. | YES | reject |
| | | >NR Neighbour Information | | O | | 9.2.98 | NR neighbour, capable of performing EN-DC with the served E-UTRA cell | YES | ignore |
| | | >Deactivation Indication | | O | | ENUMERAT ED(deactivat ed, ...) | Indicates that the concerned cell is switched off for energy saving reasons | YES | ignore |
| Served Cells To Delete | | | | | 0 .. *<maxCellineNB>* | | Complete list of deleted cells served by the eNB | GLOBAL | reject |
| | | >Old ECGI | | M | | ECGI 9.2.14 | Old E-UTRAN Cell Global Identifier of the cell to be deleted | - | |
| GU Group Id To Add List | | | | | *0 .. <maxPools>* | | | GLOBAL | reject |
| | | >GU Group Id | | M | | 9.2.20 | | - | |
| GU Group Id To Delete List | | | | | *0 .. <maxPools>* | | | GLOBAL | reject |
| | | >GU Group Id | | M | | 9.2.20 | | - | |
| Coverage Modification List | | | | | *0 .. <maxCellineNB>* | | List of cells with modified coverage | GLOBAL | reject |
| | | >ECGI | | M | | ECGI 9.2.14 | E-UTRAN Cell Global Identifier of the cell to be modified | - | |
| | | >Cell Coverage State | | M | | INTEGER (0..15, ...) | Value '0' indicates that the cell is inactive. Other values Indicates that the cell is active and also indicates the coverage configuration of the concerned cell | - | |
| | | >Cell Deployment Status Indicator | | O | | ENUMERAT ED(pre-change-notification, . ..) | Indicates the Cell Coverage State is planned to be used at the next reconfiguration | | |
| | >Cell Replacing Info | | | C-ifCellDeplo ymentStat usIndicator Present | | | | | |
| | | >>Replacing Cells | | | *0* .. *<maxCellineNB>* | | | | |
| | | | >>>ECGI | | | ECGI 9.2.14 | E-UTRAN Cell Global Identifier of a cell that may replace all or part of the coverage of the cell to be modified | | |

In an embodiment, when the first base station and the second base station both belong to a NR network, i.e. belong to a 5G mobile communication network, the inter base station interface is an Xn interface, and the updated first capability information may be carried through an XnAP signaling.

For example, the updated first capability information may be added to a NG-RAN NODE CONFIGURATION UPDATE (5G wireless access network base station configuration update) signaling, as illustrated in underlined terms of Table 4, specifically to a ng information unit or a ng-eNB information unit.

**Table 4**

| IE/Group Name | | | Presence | Range | IE type and reference | Semantics description | Criticality | Assigned Criticality |
|---|---|---|---|---|---|---|---|---|
| Message Type | | | M | | 9.2.3.1 | | YES | reject |
| TAI Support List | | | O | | 9.2.3.20 | List of supported TAs and associated characteristics. | GLOBAL | reject |
| CHOICE *Initiating NodeType* | | | M | | | | YES | ignore |
| | *>gNB* | | | | | | | |
| | | >>Served Cells To Update NR | O | | 9.2.2.15 | | YES | ignore |
| | | >>Cell Assistance Information NR | O | | 9.2.2.17 | | YES | ignore |
| | *>ng-eNB* | | | | | | | |
| | | >>Served Cells to Update E-UTRA | O | | 9.2.2.16 | | YES | ignore |
| | | >>Cell Assistance Information NR | O | | 9.2.2.17 | | YES | ignore |
| TNLA To Add List | | | | *0..1* | | | YES | ignore |
| | | >TNLA To Add Item | | *1.. <maxnoof TNLAssociati ons>* | | | - | |
| | | >>TNLA Transport Layer Information | M | | CP Transport Layer Information 9.2.3.31 | CP Transport Layer Information of NG-RAN node₁ | - | |
| | | >> TNL Association Usage | O | | 9.2.3.84 | | - | |
| TNLA To Update List | | | | *0..1* | | | YES | ignore |
| | >TNLA To Update Item | | | *1.. <maxnoof TNLAssociati ons>* | | | - | |
| | | >>TNLA Transport Layer Information | M | | CP Transport Layer Information 9.2.3.31 | CP Transport Layer Information of NG-RAN node₁ | - | |
| | | >> TNL Association Usage | O | | 9.2.3.84 | | - | |
| TNLA To Remove List | | | | *0..1* | | | YES | ignore |
| | >TNLA To Remove Item | | | *1..<maxnoof TNLAssociati ons>* | | | - | |
| | | >>TNLA Transport Layer Information | M | | CP Transport Layer Information 9.2.3.31 | CP Transport Layer Information of NG-RAN node₁ | - | |
| Global NG-RAN Node ID | | | O | | 9.2.2.3 | | YES | reject |
| AMF Region Information To Add | | | O | | AMF Region Information 9.2.3.83 | List of all added AMF Regions to which the NG-RAN node belongs. | YES | reject |
| | | AMF Region Information To Delete | O | | AMF Region Information 9.2.3.83 | List of all deleted AMF Regions to which the NG-RAN node belongs. | YES | reject |
| | | Interface Instance Indication | O | | 9.2.2.39 | | YES | reject |
| | | TNL Configuration Info | O | | 9.2.3.96 | | YES | ignore |

FIG. 6 is a flowchart illustrating yet another method for sending a capability according to an embodiment of the present disclosure. As illustrated in FIG. 6, in some embodiments, sending the first capability information to the second base station includes the following step.

At step S601, the first capability information is sent to the second base station in response to receiving a request for acquiring the first capability information from the second base station.

**In** an embodiment, the first base station may send the first capability information to the second base station upon receiving the request for acquiring the first capability information from the second base station, to avoid wasting communication resources resulted by sending the first capability information when the second base station does not require the first capability information.

It is noted that the first base station may also automatically send first capability information to the second base station, which may be set as required.

FIG. 7 is a flowchart illustrating a method for receiving a capability according to an embodiment of the present disclosure. The method for receiving the capability as illustrated in this embodiment may be applicable for a second base station. The second base station may communicate with a terminal. The terminal includes, but is not limited to, a mobile phone, a tablet, a wearable device, a sensor, an Internet-of-Things device, and other electronic devices. The base station includes, but is not limited to, a 4G (4th generation) base station, a 5G (5th generation) base station, and a 6G (6th generation) base station.

In an embodiment, the second base station may communicate with a first base station. The first base station may be a first base station to which the method for sending the capability described in any foregoing embodiment is applicable.

As illustrated in FIG. 7, the method for receiving the capability may include the following steps.

At step S701, first capability information sent by a first base station is received.

At step S702, a capability of solving a multi-card communication conflict problem in a terminal by the first base station and/or a neighboring base station of the first base station is determined based on the first capability information.

In an embodiment, the first base station may determine the capability of solving the multi-card communication conflict problem in the terminal by itself, and may also determine the capability of solving the multi-card communication conflict problem in the terminal by the neighboring base station, such as obtaining the capability of solving the multi-card communication conflict problem in the terminal by the neighboring base station through communication with the neighboring base station. Thus, the first capability information may be generated based on the capability of solving the multi-card communication conflict problem in the terminal by itself and/or the capability of solving the multi-card communication conflict problem in the terminal by the neighboring base station, and then sent to the second base station.

Based on this, it is possible to enable the second base station to determine the capability of solving the multi-card communication conflict problem in the terminal by the first base station, and/or to enable the second base station to determine the capability of solving the multi-card communication conflict problem in the terminal by the neighboring base station of the first base station, so that the second base station may be in coordination with the first base station and/or the neighboring base station of the first base station to more comprehensively solve the communication conflict problem for the terminal.

**In** an embodiment, the terminal may be provided with a plurality of SIM cards. The SIM cards may be traditional SIM cards or eSIM cards, i.e. embedded SIM cards. The plurality of SIM cards may belong to a same operator network or different operator networks.

During a process of using the plurality of SIM cards, a communication conflict problem may occur between the plurality of SIM cards in the terminal. The terminal may send the communication conflict problem to a base station, such that the based station determines a solution. The multi-card communication conflict problem may refer to a problem caused by a communication conflict between two or more SIM cards. The following is an illustrative explanation mainly under a case that the plurality of SIM cards include a first SIM card and a second SIM card, and the first capability information is configured to indicate a capability of solving a multi-card communication conflict problem in a terminal by the first base station.

It is noted that the first SIM card and the second SIM card refer to any two different SIM cards in the terminal in general, rather than specifically referring to certain two SIM cards in the terminal.

In an embodiment, the capability of solving the multi-card communication conflict problem in the terminal includes one of:
being able to solve the multi-card communication conflict problem in the terminal, or being unable to solve the multi-card communication conflict problem in the terminal.

In an embodiment, capabilities of solving the multi-card communication conflict problem by different base stations may be different. Roughly, capabilities of solving the communication conflict problem may be classified into being able to solve the communication conflict problem and being unable to solve the communication conflict problem. Specifically, the capability of solving the communication conflict problem may be specific to a manner to solve the communication conflict problem, or a type of the communication conflict problem that can be solved, etc.

In an embodiment, for example, the first base station is able to solve the multi-card communication conflict problem, while the second base station is unable to solve the multi-card communication conflict problem.

The second base station may determine that the first base station is able to solve the multi-card communication conflict problem based on the first capability information. Therefore, when the terminal communicating with the second base station is required to solve the multi-card communication conflict problem, the second base station may send the multi-card communication conflict problem to be solved by the terminal to the first base station, such that the first base station determines the solution, and then obtains the solution and sends the solution to the terminal. Thus, the second base station may be in coordination with the first base station to solve the communication conflict problem for the terminal.

In an embodiment, in response to the capability of solving the multi-card communication conflict problem in the terminal including being able to solve the multi-card communication conflict problem in the terminal, the method further includes:
determining a manner to solve the multi-card communication conflict problem in the terminal by the first base station and/or the neighboring base station of the first base station based on the first capability information.

In an embodiment, the manner includes at least one of:
changing a user equipment identifier of a subscriber identity module (SIM) card, providing an offset corresponding to the user equipment identifier of the SIM card, changing an algorithm for determining a paging occasion based on the user equipment identifier of the SIM card, providing a paging reason, or allowing the SIM card to be temporarily disconnected.

In an embodiment, the second base station may also determine the manner to solve the multi-card communication conflict problem by the first base station based on the first capability information. Therefore, when the terminal communicating with the second base station is required to solve the multi-card communication conflict problem, the second base station may determine the manner in which the terminal is required to solve the multi-card communication conflict problem and determine whether the manner in which the terminal is required to solve the multi card communication conflict problem belongs to the manner that the second base station can solve the multi-card communication conflict. In case of not belonging to the manner that the second base station can solve the multi-card communication conflict problem, the second base station may further determine whether the manner in which the terminal is required to solve the multi card communication conflict problem belongs to the manner that the first base station can solve the multi-card communication conflict problem. In case of belonging to the manner that the first base station can solve the multi-card communication conflict problem, the second base station may send the multi-card communication conflict problem to be solved by the terminal to the first base station, and the first base station may determine the solution in a corresponding manner.

For example, the first base station is able to solve the multi-card communication conflict problem. Specific manners to solve the multi-card communication conflict problems include changing the user equipment identifier of the SIM card, providing the offset corresponding to the user equipment identifier of the SIM card, changing the algorithm for determining the paging occasion based on the user equipment identifier of the SIM card.

The second base station is also able to solve the multi-card communication conflict problem. Specific manners to solve the multi-card communication conflict problems include providing the paging reason, or allowing the SIM card to be temporarily disconnected.

For example, the manner in which the terminal is required to solve the multi-card communication conflict problem is changing the user equipment identifier of the SIM card. The terminal may report the manner to solve the multi-card communication conflict problem to the second base station through auxiliary information. The second base station may determine that the second base station itself is unable to solve the multi-card communication conflict problem in this manner, but the first base station is able to solve the multi-card communication conflict problem in this manner. Thus, the second base station may send the multi-card communication conflict problem to be solved by the terminal to the first base station, and the first base station determines the solution in the manner of changing the user equipment identifier of the SIM card, and then obtains the solution and send the solution to the terminal. Therefore, the second base station may be in coordination with the first base station to solve the communication conflict problem in the manner required by the terminal.

In an embodiment, in response to the capability of solving the multi-card communication conflict problem in the terminal including being able to solve the multi-card communication conflict problem in the terminal, the method further includes:
determining a type of the multi-card communication conflict problem in the terminal which can be solved by the first base station and/or the neighboring base station of the first base station based on the first capability information.

In an embodiment, the type includes at least one of:
a conflict between a first SIM card monitoring a paging message and a second SIM card monitoring a paging message in the terminal;
a conflict between a first SIM card performing a communication operation and the second SIM card monitoring a paging message in the terminal;
a conflict between the first SIM card performing a communication operation and a second SIM card responding to a paging message in the terminal;
a conflict between the first SIM card performing a communication operation and a second SIM card measuring a signal in the terminal;
a conflict between the first SIM card performing a communication operation and a second SIM card receiving system information in the terminal; or
a conflict between the first SIM card performing a communication operation and a second SIM card updating a tracking area in the terminal.

In an embodiment, the second base station may also the type of the multi-card communication conflict problem which can be solved by the first base station based on the first capability information. Therefore, when the terminal communicating with the second base station is required to solve the multi-card communication conflict problem, the second base station may determine the type of the multi-card communication conflict problem to be solved by the terminal, and determine whether the type of the multi-card communication conflict problem to be solved by the terminal belongs to a type of the multi-card communication conflict problem which can be solved by the second base station. In case of not belonging to the type of the multi-card communication conflict problem which can be solved by the second base station, the second base station may further determine whether the type of the multi-card communication conflict problem to be solved by the terminal belongs to the type of the multi-card communication conflict problem which can be solved by the first base station. In case of belonging to the type of the multi-card communication conflict problem which can be solved by the first base station, the second base station may send the multi-card communication conflict problem to be solved by the terminal to the first base station, and the first base station may determine the solution.

For example, the first base station may be able to solve the multi-card communication conflict problem. Specific types of the multi-card communication conflict problems which can be solved include the conflict between the first SIM card monitoring the paging message and the second SIM card monitoring the paging message in the terminal; the conflict between the first SIM card performing the communication operation and the second SIM card monitoring the paging message in the terminal; and the conflict between the first SIM card performing the communication operation and the second SIM card responding to the paging message in the terminal.

The second base station may also be able to solve the multi-card communication conflict problem. Specific types of the multi-card communication conflict problems which can be solved include the conflict between the first SIM card performing the communication operation and the second SIM card measuring the signal in the terminal; the conflict between the first SIM card performing the communication operation and the second SIM card receiving the system information in the terminal; or the conflict between the first SIM card performing the communication operation and the second SIM card updating the tracking area in the terminal.

For example, the type of the multi-card communication conflict problem to be solved by the terminal is the conflict between the first SIM card monitoring the paging message and the second SIM card monitoring the paging message in the terminal. The second base station may determine that the second base station itself is unable to solve this type of multi-card communication conflict problem, but the first base station is able to solve this type of multi-card communication conflict problem. Thus, the second base station may send the multi-card communication conflict problem to be solved by the terminal to the first base station, and the first base station determines the solution, and then obtains the solution and send the solution to the terminal. Therefore, the second base station may be in coordination with the first base station to solve the communication conflict problem for the terminal.

FIG. 8 is a flowchart illustrating another method for receiving a capability according to an embodiment of the present disclosure. As illustrated in FIG. 8, in some embodiments, s receiving the first capability information sent by the first base station includes the following step.

At step S801, a setup request signaling for an inter base station interface sent by the first base station is received, in which the first capability information is carried in the setup request signaling.

In an embodiment, the first base station may send the setup request signaling for the inter base station interface to the second base station, to set up the inter base station interface with the second base station, and may carry the first capability information in the setup request signaling, which may expand functionality of signaling and improving a utilization rate for signaling.

It is noted that the first base station may also send the first capability information to the second base station through the inter base station interface after setting up the inter base station interface with the second base station.

**In** an embodiment, when the first base station and the second base station both belong to an E-UTRAN, i.e. belong to a 4G LTE mobile communication network, the inter base station interface is an X2 interface, and the setup request signaling may be an X2 SETUP REQUEST signaling.

For example, as illustrated in underlined terms of Table 1, the first capability information may be added to a Served Cell Information information unit in the X2 SETUP REQUEST signaling, or added to a Neighbor Information information unit, or added to a NR Neighbor Information information unit. Alternatively, a new information unit may be added independently to the X2 SETUP REQUEST signaling, and then the first capability information is added to the new information unit.

**In** an embodiment, when the first base station and the second base station both belong to a NR network, i.e. belong to a 5G mobile communication network, the inter base station interface is an Xn interface, and the setup request signaling may be an Xn SETUP REQUEST signaling.

For example, as illustrated in underlined terms of Table 2, the first capability information may be added to a Served Cell Information NR information unit of a List of Served Cells NR information unit in the Xn SETUP REQUEST signaling, or added to a Neighbor Information E-UTRA information unit, or added to a Neighbor Information NR information unit.

For example, as illustrated in underlined terms of Table 2, the first capability information may be added to a Served Cell Information NR information unit of a List of Served Cells E-UTRA information unit in the Xn SETUP REQUEST signaling, or added to a Neighbor Information NR information unit, or added to a Neighbor Information E-UTRA information unit.

Alternatively, a new information unit may be added independently to the Xn SETUP REQUEST signaling, and then the first capability information is added to the new information unit.

In an embodiment, the method further includes:
setting up the inter base station interface with the first base station and/or the neighboring base station in response to determining that the capability is a target capability.

In an embodiment, after determining the capability of solving the multi-card communication conflict problem by the first base station and/or the neighboring base station of the first base station, the second base station may further determine whether the capability is the target capability. The target capability may be a capability that the second base station does not have or a capability that the second base station has, which may be set as required.

For example, when the target capability is the capability that the second base station does not have, the second base station may determine that the capability of solving the multi-card communication conflict problem is the target capability based on the multi-card communication conflict problem reported by the terminal. However, the second base station does not have the target capability. In this case, the first base station requests to set up the inter base station interface, and the second base station may determine whether the first base station and/or the neighboring base station of the first base station have the target capability.

For example, when the first base station has the target capability, the second base station may set up the inter base station interface with the first base station. For example, the second base station informs the first base station that the inter base station interface has been successfully set up in the setup response signal for the inter base station interface sent to the first base station.

For example, when the neighboring base station of the first base station has the target capability, the second base station may set up the inter base station interface with the neighboring base station of the first base station, for example, in the setup request signaling for the inter base station interface sent to the neighboring base station of the first base station.

Therefore, in absence of target capability, the second base station may set up the inter base station interface with the base station having the target capability, and then send the multi-card communication conflict problem to be solved by the terminal to the base station having the target capability. The base station having the target capability may solve the multi-card communication conflict problem.

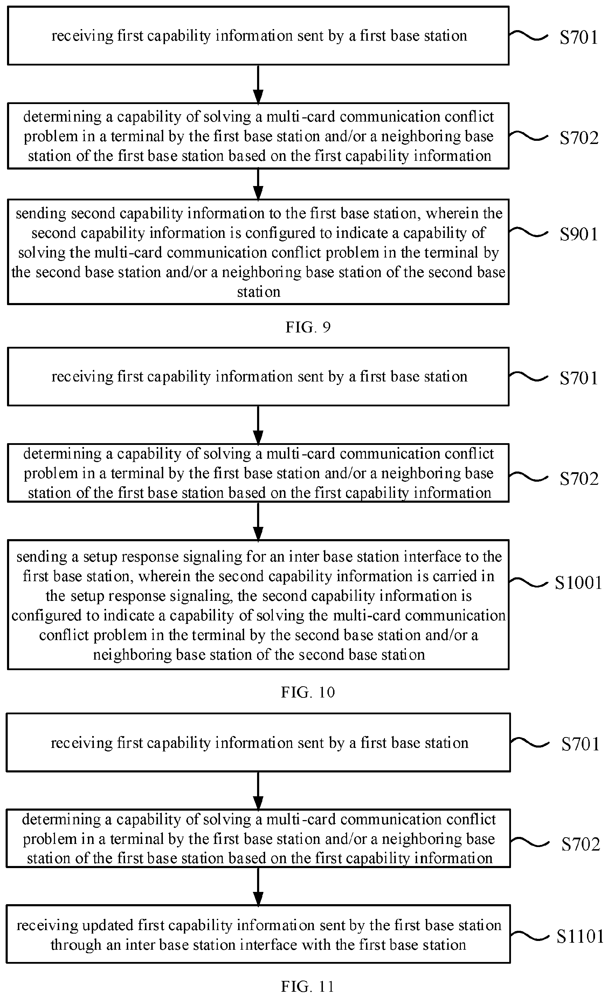

FIG. 9 is a flowchart illustrating yet another method for receiving a capability according to an embodiment of the present disclosure. As illustrated in FIG. 9, in some embodiments, the method may further include the following step.

At step S901, second capability information is sent to the first base station, in which, the second capability information is configured to indicate a capability of solving the multi-card communication conflict problem in the terminal by the second base station and/or a neighboring base station of the second base station.

In an embodiment, the second base station may determine the capability of solving the multi-card communication conflict problem in the terminal by itself, and may also determine the capability of solving the multi-card communication conflict problem in the terminal by the neighboring base station, such as obtaining the capability of solving the multi-card communication conflict problem in the terminal by the neighboring base station through communication with the neighboring base station. Thus, the second capability information may be generated based on the capability of solving the multi-card communication conflict problem in the terminal by itself and/or the capability of solving the multi-card communication conflict problem in the terminal by the neighboring base station, and then sent to the first base station.

FIG. 10 is a flowchart illustrating yet another method for receiving a capability according to an embodiment of the present disclosure. As illustrated in FIG. 10, in some embodiments, sending the second capability information to the first base station may further include the following step.

At step S1001, a setup response signaling for an inter base station interface is sent to the first base station, in which the second capability information is carried in the setup response signaling.

In an embodiment, the second base station may send the setup response signaling for the inter base station interface to the first base station (for example, after receiving the setup request signaling in the above embodiment) to inform the first base station whether the inter base station interface has been successfully set up, and the second capability information may be carried in the setup response signaling, which may expand functionality of signaling and improving a utilization rate for signaling.

It is noted that the second base station may also send the second capability information to the first base station through the inter base station interface after setting up the inter base station interface with the first base station.

In an embodiment, when the first base station and the second base station both belong to an E-UTRAN, i.e. belong to a 4G LTE mobile communication network, the inter base station interface is an X2 interface, and the setup response signaling may be an X2 SETUP RESPONSE signaling.

In an embodiment, the first capability information may be added to a Served Cell Information information unit in the X2 SETUP RESPONSE signaling, or added to a Neighbor Information information unit, or added to a NR Neighbor Information information unit. Alternatively, a new information unit may be added independently to the X2 SETUP RESPONSE signaling, and then the first capability information is added to the new information unit.

In an embodiment, when the first base station and the second base station both belong to a NR (New Radio) network, i.e. belong to a 5G mobile communication network, the inter base station interface is an Xn interface, and the setup request signaling may be an Xn SETUP RESPONSE signaling.

For example, the second capability information may be added to a Served Cell Information NR information unit of a List of Served Cells NR information unit in the Xn SETUP RESPONSE signaling, or added to a Neighbor Information E-UTRA information unit, or added to a Neighbor Information NR information unit.

For example, the first capability information may be added to a Served Cell Information NR information unit of a List of Served Cells E-UTRA information unit in the Xn SETUP REQUEST signaling, or added to a Neighbor Information NR information unit, or added to a Neighbor Information E-UTRA information unit.

For example, a new information unit may be added independently to the Xn SETUP RESPONSE signaling, and then the first capability information is added to the new information unit.

FIG. 11 is a flowchart illustrating yet another method for receiving a capability according to an embodiment of the present disclosure. As illustrated in FIG. 11, in some embodiments, the method may further include the following step.

At step S1101, updated first capability information sent by the first base station is received through an inter base station interface with the first base station.

In an embodiment, the capability of solving the multi-card communication conflict problem by the base station may be changed, such as when the capability of solving the multi-card communication conflict problem by the first base station changes, and/or when the capability of solving the multi-card communication conflict problem by the neighboring base station of the first base station changes, the first capability information may be updated, and then the updated first capability information may be sent to the second base station through the inter base station interface, to enable the second base station to accurately determine a current capability of solving the multi-card communication conflict problem by the first base station and/or the neighboring base station of the first base station.

In an embodiment, when the first base station and the second base station both belong to an E-UTRAN, i.e. belong to a 4G LTE mobile communication network, the inter base station interface is an X2 interface, and the updated first capability information may be carried through an X2AP signaling.

For example, the updated first capability information may be added to an ENB CONFIGURATION UPDATE signaling, specifically to a Served Cells To Add information unit or to a Served Cells To Modify information unit (as illustrated in underlined terms of Table 3).

In an embodiment, when the first base station and the second base station both belong to a NR network, i.e. belong to a 5G mobile communication network, the inter base station interface is an Xn interface, and the updated first capability information may be carried through an XnAP signaling.

For example, the updated first capability information may be added to a NG-RAN NODE CONFIGURATION UPDATE signaling, as illustrated in underlined terms of Table 4, specifically to a ng information unit or a ng-eNB information unit.

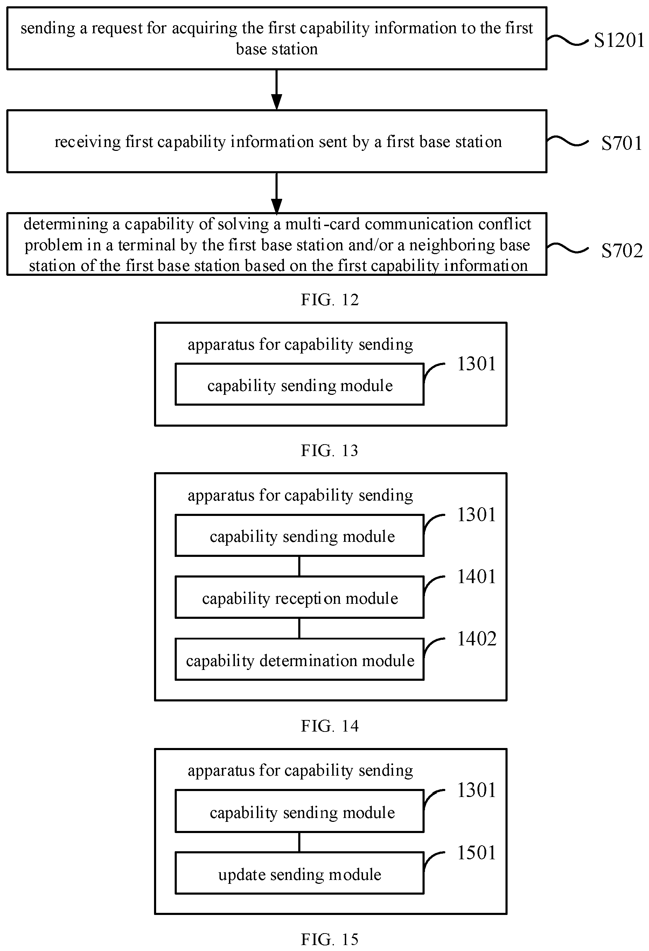

FIG. 12 is a flowchart illustrating yet another method for receiving a capability according to an embodiment of the present disclosure. As illustrated in FIG. 12, in some embodiments, the method may further include the following step.

At step S1201, a request for acquiring the first capability information is sent to the first base station.

In an embodiment, the second base station may send the request for acquiring the first capability information to the first base station when requiring the first capability information. Therefore, the first base station may send the first capability information to the second base station upon receiving the request for acquiring the first capability information from the second base station, to avoid wasting communication resources resulted by sending the first capability information when the second base station does not require the first capability information.

An embodiment of the present disclosure also provides a method for sending a problem. The method for sending the problem may be applicable for a terminal. The terminal may communicate with a base station, for example, with a second base station. The terminal includes, but is not limited to, a mobile phone, a tablet, a wearable device, a sensor, an Internet-of-Things device, and other electronic devices. The base station includes, but is not limited to, a 4G base station, a 5G base station, and a 6G base station.

The method for sending the problem may include:
sending a multi-card communication conflict problem to a second base station in response to having the multi-card communication conflict problem;
in which, the multi-card communication conflict problem is configured for the second base station to determine whether to receive first capability information sent by a first base station, and the first capability information is configured to indicate a capability of solving a multi-card communication conflict problem in a terminal by the first base station and/or a neighboring base station of the first base station.

In an embodiment, the terminal may be provided with a plurality of SIM cards. The SIM cards may be traditional SIM cards or eSIM cards, i.e. embedded SIM cards. The plurality of SIM cards may belong to a same operator network or different operator networks.

The multi-card communication conflict problem may exist between the plurality of SIM cards. Existing the multi-card communication conflict problem may refer to the multi-card communication conflict problem has been existed in the terminal already, or may refer to that the terminal determines that multi-card communication conflict problem is about to occur. The following is an illustrative explanation mainly under a case that the plurality of SIM cards include the first SIM card and the second SIM card.

In an embodiment, when the terminal is in a cell of the second base station, and the multi-card communication conflict problem exists in the terminal, the terminal may send the multi-card communication conflict problem to the second base station to obtain the resolution information from the second base station, and then solve the multi-card communication conflict problem based on the resolution information.

Although the second base station has received the multi-card communication conflict problem sent by the terminal, due to different capabilities of solving the multi-card communication conflict problem by different base stations, the second base station may not necessarily have the capability of solving the multi-card communication conflict problem.

Based on this embodiment, the second base station may determine whether to receive the first capability information sent by the first base station based on the received multi-card communication conflict problem. In response to the capability of solving the multi-card communication conflict problem by the second base station including being able to solve the received multi-card communication conflict problem, the second base station may not necessarily receive the first capability information sent by the first base station to avoid wasting communication resources. In response to the capability of solving the multi-card communication conflict problem by the second base station including being unable to solve the received multi-card communication conflict problem, the second base station may receive the first capability information sent by the first base station to determine the capability of solving the multi-card communication conflict problem by the first base station and/or the neighboring base station of the first base station, and further cooperate with the first base station and/or the neighboring base station of the first base station to solve the multi-card communication conflict problem, to ensure that solving the multi-card communication conflict problem is achieved.

In some embodiments, the method for sending the problem further includes:
receiving resolution information for the multi-card communication conflict problem sent by the second base station;
in which, the resolution information is generated by the second base station in response to the second base station being able to solve the multi-card communication conflict problem, and the resolution information is generated by the first base station and/or the neighboring base station of the first base station in response to the second base station being unable to solve the multi-card communication conflict problem.

In an embodiment, although the second base station has the capability of solving the multi-card communication conflict problem, this capability is not applicable to solving the received multi-card communication conflict problem.

For example, a type of the multi-card communication conflict problem to be solved by the terminal is a conflict between the first SIM card monitoring a paging message and the second SIM card monitoring a paging message in the terminal. The second base station may only solve a conflict between the first SIM card performing a communication operation and the second SIM card receiving system information in the terminal, that is, cannot solve the received multi-card communication conflict problem. Therefore, the second base station may receive the first capability information sent by the first base station, to determine whether the first base station and/or the neighboring base station of the first base station can solve the multi-card communication conflict problem sent by the terminal.

For example, the first base station has the capability of solving the multi-card communication conflict problem, and is applicable for solving the multi-card communication conflict problem sent by the terminal. The second base station may send the received multi-card communication conflict problem to the first base station. The first base station generates the resolution information and sends the resolution information to the second base station, and then the second base station sends the resolution information to the terminal.

In an embodiment, the second base station has the capability of solving the multi-card communication conflict problem, and this capability is applicable for solving the received multi-card communication conflict problem.

For example, the type of the multi-card communication conflict problem to be solved by the terminal is the conflict between the first SIM card monitoring the paging message and the second SIM card monitoring the paging message in the terminal. The second base station may also solve the conflict between the first SIM card monitoring the paging message and the second SIM card monitoring the paging message in the terminal. Therefore, the second base station is able to solve the received multi-card communication conflict problem, and is not necessary to receive the first capability information sent by the first base station. The second base station may generate the resolution information and sent to the second base station, and then the second base station sends the resolution information to the terminal.

Corresponding to the aforementioned embodiments of the method for sending the capability and the method for receiving the capability, the present disclosure also provides embodiments of the apparatus for sending the capability and the apparatus for receiving the capability.

FIG. 13 is a block diagram illustrating an apparatus for sending a capability according to an embodiment of the present disclosure. The apparatus for sending the capability as illustrated in this embodiment may be applicable for a first base station. The first base station may communicate with a terminal. The terminal includes, but is not limited to, a mobile phone, a tablet, a wearable device, a sensor, an Internet-of-Things device, and other electronic devices. The base station includes, but is not limited to, a 4G base station, a 5G base station, and a 6G base station.

In an embodiment, the first base station may communicate with a second base station. The second base station may be a second base station to which the apparatus for receiving the capability described in any subsequent embodiment is applicable.

As illustrated in FIG. 13, the apparatus for sending the capability may include:
a capability sending module 1301, configured to send a first capability information to a second base station, in which, the first capability information is configured to indicate a capability of solving a multi-card communication conflict problem in a terminal by the first base station and/or a neighboring base station of the first base station.

In an embodiment, the capability of solving the multi-card communication conflict problem in the terminal includes one of:
being able to solve the multi-card communication conflict problem in the terminal, or being unable to solve the multi-card communication conflict problem in the terminal.

In an optional embodiment, in response to the capability of solving the multi-card communication conflict problem in the terminal including being able to solve the multi-card communication conflict problem in the terminal, the first capability information is further configured to indicate a manner to solve the multi-card communication conflict problem in the terminal by the first base station and/or the neighboring base station of the first base station.

In an optional embodiment, the manner includes at least one of:
changing a user equipment identifier of a subscriber identity module (SIM) card, providing an offset corresponding to the user equipment identifier of the SIM card, changing an algorithm for determining a paging occasion based on the user equipment identifier of the SIM card, providing a paging reason, or allowing the SIM card to be temporarily disconnected.

In an optional embodiment, in response to the capability of solving the multi-card communication conflict problem in the terminal including being able to solve the multi-card communication conflict problem in the terminal, the first capability information is further configured to indicate a type of the multi-card communication conflict problem in the terminal which can be solved by the first base station and/or the neighboring base station of the first base station.

In an optional embodiment, the type includes at least one of:
a conflict between a first SIM card monitoring a paging message and a second SIM card monitoring a paging message in the terminal;
a conflict between a first SIM card performing a communication operation and the second SIM card monitoring a paging message in the terminal;
a conflict between the first SIM card performing a communication operation and a second SIM card responding to a paging message in the terminal;
a conflict between the first SIM card performing a communication operation and a second SIM card measuring a signal in the terminal;
a conflict between the first SIM card performing a communication operation and a second SIM card receiving system information in the terminal; or
a conflict between the first SIM card performing a communication operation and a second SIM card updating a tracking area in the terminal.

In an optional embodiment, the capability sending module is configured to send the first capability information to the second base station by carrying the first capability information in a setup request signaling for an inter base station interface.

FIG. 14 is a block diagram illustrating another apparatus for sending a capability according to an embodiment of the present disclosure. As illustrated in FIG. 14, the apparatus further includes:
a capability reception module 1401, configured to receive second capability information sent by the second base station;
a capability determination module 1402, configured to determine a capability of solving the multi-card communication conflict problem in the terminal by the second base station and/or a neighboring base station of the second base station based on the second capability information.

In an embodiment, the capability reception module is configured to receive a setup response signaling for an inter base station interface sent by the second base station, in which, the second capability information is carried in the setup response signaling.

FIG. 15 is a block diagram illustrating yet another apparatus for sending a capability according to an embodiment of the present disclosure. As illustrated in FIG. 15, the apparatus further includes:
an update sending module 1501, configured to, in response to updating of the first capability information, send updated first capability information to the second base station through an inter base station interface with the second base station.

In an embodiment, the capability sending module is configured to send the first capability information to the second base station in response to receiving a request for acquiring the first capability information from the second base station.

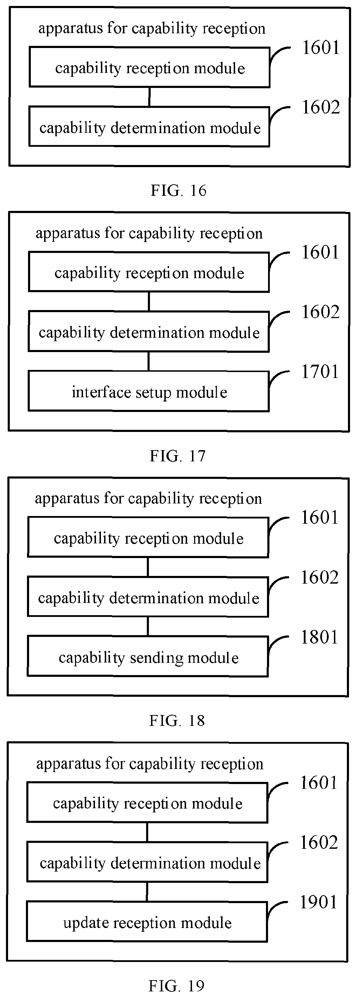

FIG. 16 is a block diagram illustrating an apparatus for receiving a capability according to an embodiment of the present disclosure. The apparatus for receiving the capability as illustrated in this embodiment may be applicable for a second base station. The second base station may communicate with a terminal. The terminal includes, but is not limited to, a mobile phone, a tablet, a wearable device, a sensor, an Internet-of-Things device, and other electronic devices. The base station includes, but is not limited to, a 4G base station, a 5G base station, and a 6G base station.

In an embodiment, the second base station may communicate with a first base station. The first base station may be a first base station to which the apparatus for sending the capability described in any foregoing embodiment is applicable.

As illustrated in FIG. 16, the apparatus for receiving the capability may include:
a capability reception module 1601, configured to receive first capability information sent by a first base station; and
a capability determination module 1602, configured to determine a capability of solving a multi-card communication conflict problem in a terminal by the first base station and/or a neighboring base station of the first base station based on the first capability information.

In an embodiment, the capability of solving the multi-card communication conflict problem in the terminal includes one of:
being able to solve the multi-card communication conflict problem in the terminal, or being unable to solve the multi-card communication conflict problem in the terminal.

In an embodiment, in response to the capability of solving the multi-card communication conflict problem in the terminal including being able to solve the multi-card communication conflict problem in the terminal, the apparatus further includes:
a manner determination module, configured to determine a manner to solve the multi-card communication conflict problem in the terminal by the first base station and/or the neighboring base station of the first base station based on the first capability information.

In an embodiment, the manner includes at least one of:
changing a user equipment identifier of a subscriber identity module (SIM) card, providing an offset corresponding to the user equipment identifier of the SIM card, changing an algorithm for determining a paging occasion based on the user equipment identifier of the SIM card, providing a paging reason, or allowing the SIM card to be temporarily disconnected.

In an embodiment, in response to the capability of solving the multi-card communication conflict problem in the terminal including being able to solve the multi-card communication conflict problem in the terminal, the apparatus further includes:
a type determination module, configured to determine a type of the multi-card communication conflict problem in the terminal which can be solved by the first base station and/or the neighboring base station of the first base station based on the first capability information.

In an embodiment, the type includes at least one of:
a conflict between a first SIM card monitoring a paging message and a second SIM card monitoring a paging message in the terminal;
a conflict between a first SIM card performing a communication operation and the second SIM card monitoring a paging message in the terminal;
a conflict between the first SIM card performing a communication operation and a second SIM card responding to a paging message in the terminal;
a conflict between the first SIM card performing a communication operation and a second SIM card measuring a signal in the terminal;
a conflict between the first SIM card performing a communication operation and a second SIM card receiving system information in the terminal; or
a conflict between the first SIM card performing a communication operation and a second SIM card updating a tracking area in the terminal.

In an embodiment, the capability reception module is configured to receive a setup request signaling for an inter base station interface sent by the first base station, in which, the first capability information is carried in the setup request signaling.

FIG. 17 is a block diagram illustrating another apparatus for receiving a capability according to an embodiment of the present disclosure. As illustrated in FIG. 17, in some embodiments, the apparatus further includes:
an interface setup module 1701, configured to, set up the inter base station interface with the first base station and/or the neighboring base station in response to determining that the capability is a target capability.

FIG. 18 is a block diagram illustrating yet another apparatus for receiving a capability according to an embodiment of the present disclosure. As illustrated in FIG. 18, in some embodiments, the apparatus further includes:
a capability sending module 1801, configured to send second capability information to the first base station, in which, the second capability information is configured to indicate a capability of solving the multi-card communication conflict problem in the terminal by the second base station and/or a neighboring base station of the second base station.

In an embodiment, the capability sending module is configured to send a setup response signaling for an inter base station interface to the first base station, in which, the second capability information is carried in the setup response signaling.

FIG. 19 is a block diagram illustrating yet another apparatus for receiving a capability according to an embodiment of the present disclosure. As illustrated in FIG. 19, in some embodiments, the apparatus further includes:
an update reception module 1901, configured to receive updated first capability information sent by the first base station through an inter base station interface with the first base station.

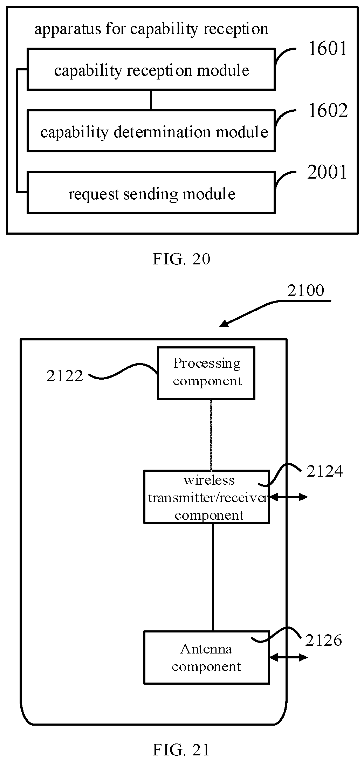

FIG. 20 is a block diagram illustrating yet another apparatus for receiving a capability according to an embodiment of the present disclosure. As illustrated in FIG. 20, in some embodiments, the apparatus further includes:
**a** request sending module 2001, configured to send a request for acquiring the first capability information to the first base station.

An embodiment of the present disclosure also provides an apparatus for sending a problem. The apparatus for sending the problem may be applicable for a terminal. The terminal may communicate with a base station, for example, with a second base station. The terminal includes, but is not limited to, a mobile phone, a tablet, a wearable device, a sensor, an Internet-of-Things device, and other electronic devices. The base station includes, but is not limited to, a 4G base station, a 5G base station, and a 6G base station.

An apparatus for sending a problem may include:
a problem sending module, configured to send a multi-card communication conflict problem to a second base station in response to having the multi-card communication conflict problem;
in which, the multi-card communication conflict problem is configured for the second base station to determine whether to receive first capability information sent by a first base station, and the first capability information is configured to indicate a capability of solving a multi-card communication conflict problem in a terminal by the first base station and/or a neighboring base station of the first base station.

In some embodiments, the apparatus may further include:
an information reception module, configured to receive resolution information for the multi-card communication conflict problem sent by the second base station;
in which, the resolution information is generated by the second base station in response to the second base station being able to solve the multi-card communication conflict problem, and the resolution information is generated by the first base station and/or the neighboring base station of the first base station in response to the second base station being unable to solve the multi-card communication conflict problem.

With respect to the apparatus in the above embodiments, the specific way in which each module performs its operation has been described in detail in the embodiments of the relevant method, and will not be described in detail here.

The apparatus embodiments basically correspond to the method embodiments, and the related contents can refer to part of the descriptions of the method embodiments. The above-described apparatus embodiments are merely schematic, the modules described above as separate components may or may not be physically separated, and the components displayed as modules may or may not be physical modules, i.e., the components may be located in one area or may be distributed to multiple network modules. Some or all of these modules can be selected according to practical needs to achieve the purpose of the solution of the disclosure. Those skilled in the art can understand and implement the solution without inventive works.

An embodiment of the disclosure also provides an electronic device. The electronic device includes:
a processor; and
a memory, configured to store instructions executable by the processor;
in which, the processor is configured to perform the method for sending the capability according to any one of the above embodiments, and/or the method for receiving the capability according to any one of the above embodiments.

An embodiment of the disclosure also provides an electronic device. The electronic device includes:
a processor; and
a memory, configured to store instructions executable by the processor;
in which, the processor is configured to perform the method for sending the problem according to any one of the above embodiments.

An embodiment of the disclosure provides a computer-readable storage medium having computer programs stored thereon. The computer program is caused to implement a step of the method for sending the problem according to any one of the above embodiments when executed by a processor.

An embodiment of the disclosure provides a computer-readable storage medium having computer programs stored thereon. The computer program is caused to implement a step of the method for sending the capability according to any one of the above embodiments, and/or the method for receiving the capability according to any one of the above embodiments when executed by a processor.

As shown in FIG. 21, FIG. 21 is a block diagram of a device 2100 applicable for sending the capability and/or receiving the capability according to an embodiment of the disclosure. The device 2100 may be provided as a base station. As shown in FIG. 21, the device 2100 includes a processing component 2122, a wireless transmitter/receiver component 2124, an antenna component 2126, and a signal processing portion specific to a wireless interface. The processing component 2122 may include one or more processors. One of the processors of the processing component 2122 may be configured to implement the method for sending the capability according to any one of the above embodiments, and/or the method for receiving the capability according to any one of the above embodiments.

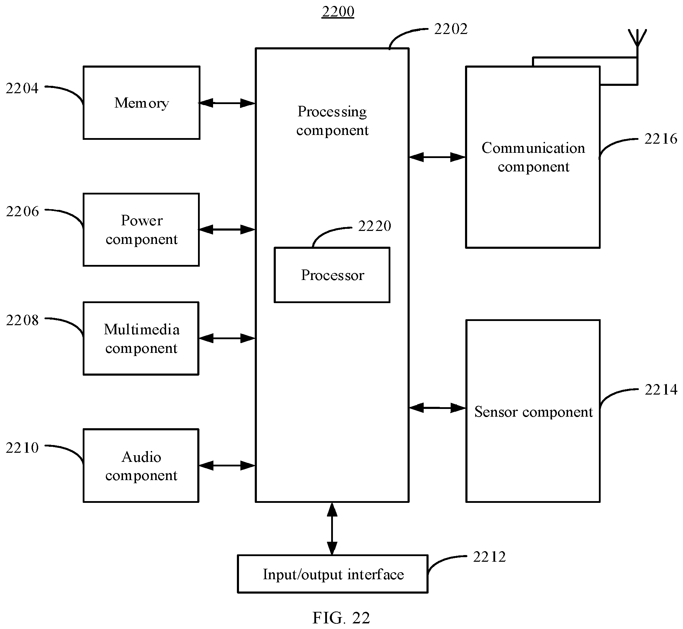

FIG. 22 is a block diagram of a device 2200 for sending a problem according to an embodiment of the disclosure. For example, the device 2200 may be a cell phone, a computer, a digital broadcast terminal, a message transceiver device, a game console, a tablet device, a medical device, a fitness device and a personal digital assistant.

As shown in FIG. 22, the device 2200 may include one or more of the following components: a processing component 2202, a memory 2204, a power component 2206, a multimedia component 2208, an audio component 2210, an input/output (I/O) interface 2212, a sensor component 2214, and a communication component 2216.

The processing component 2202 typically controls overall operations of the device 2200, such as the operations associated with display, telephone calls, data communications, camera operations, and recording operations. The processing component 2202 may include one or more processors 2220 to perform all or part of the steps in the above described method. Moreover, the processing component 2202 may include one or more modules which facilitate the interaction between the processing component 2202 and other components. For example, the processing component 2202 may include a multimedia module to facilitate the interaction between the multimedia component 2208 and the processing component 2202.

The memory 2204 is configured to store various types of data to support the operation of the device 2200. Examples of such data include instructions for any applications or methods operated on the device 2200, contact data, phonebook data, messages, pictures, video, etc. The memory 2204 may be implemented using any type of volatile or non-volatile memory devices, or a combination thereof, such as a Static Random Access Memory (SRAM), an Electrically Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 2206 provides power to various components of the device 2200. The power component 2206 may include a power management system, one or more power sources, and any other components associated with the generation, management, and distribution of power in the device 2200.

The multimedia component 2208 includes a screen providing an output interface between the device 2200 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 2208 includes a front-facing camera and/or a rear-facing camera. When the device 2200 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 2210 is configured to output and/or input audio signals. For example, the audio component 2210 includes a microphone (MIC) configured to receive an external audio signal when the device 2200 is in an operation mode, such as a call mode, a recording mode, and a voice recognition mode. The received audio signal may be further stored in the memory 2204 or transmitted via the communication component 2216. In some embodiments, the audio component 2210 further includes a speaker to output audio signals.

The I/O interface 2212 provides an interface between the processing component 2202 and peripheral interface modules, such as a keyboard, a click wheel, buttons, and the like. The buttons may include, but are not limited to, a home button, a volume button, a starting button, and a locking button.

The sensor component 2214 includes one or more sensors to provide status assessments of various aspects of the device 2200. For instance, the sensor component 2214 may detect an open/closed status of the device 2200, relative positioning of components, e.g., the display and the keypad, of the device 2200, a change in position of the device 2200 or a component of the device 2200, a presence or absence of user contact with the device 2200, an orientation or an acceleration/deceleration of the device 2200, and a change in temperature of the device 2200. The sensor component 2214 may include a proximity sensor configured to detect the presence of nearby objects without any physical contact. The sensor component 2214 may also include a light sensor, such as a Complementary Metal Oxide Semiconductor (CMOS) or Charge-Coupled Device (CCD) image sensor, for use in imaging applications. In some embodiments, the sensor component 2214 may also include an accelerometer sensor, a gyroscope sensor, a magnetic sensor, a pressure sensor, or a temperature sensor.

The communication component 2216 is configured to facilitate communication, wired or wirelessly, between the device 2200 and other devices. The device 2200 can access a wireless network based on a communication standard, such as WiFi, 2G, 3G, 4G LTE, 5G NR or a combination thereof. In an exemplary embodiment, the communication component 2216 receives a broadcast signal or broadcast associated information from an external broadcast management system via a broadcast channel. In an exemplary embodiment, the communication component 2216 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In the exemplary embodiment, the device 2200 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described method.

In the exemplary embodiments, there is also provided a non-transitory computer-readable storage medium including executable instructions, such as the memory 2204, executable by the processor 2220 in the device 2200, for performing the above method. For example, the non-transitory computer-readable storage medium may be a ROM, a Random Access Memory (RAM), a CD-ROM, a magnetic tape, a floppy disc, and an optical data storage device.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

It should be noted that the relational terms herein, such as "first" and "second", are used only for differentiating one entity or operation, from another entity or operation, which, however do not necessarily require or imply that there should be any real relationship or sequence. Moreover, the terms "comprise", "include" or any other variations thereof are meant to cover non-exclusive including, so that the process, method, article or device comprising a series of elements do not only comprise those elements, but also comprise other elements that are not explicitly listed or also comprise the inherent elements of the process, method, article or device. In the case that there are no more restrictions, an element qualified by the statement "comprises a... " does not exclude the presence of additional identical elements in the process, method, article or device that comprises the said element.

The method and apparatus of the embodiments of the disclosure have been described in detail above, and specific examples are applied in the disclosure to illustrate the principles and implementation of the disclosure. The above embodiments are only used to facilitate understanding the method and core ideas of the disclosure. Meanwhile, for those skilled in the art, according to the ideas of this disclosure, there will be changes in the specific implementation.

## Claims

1. A method for sending a capability, performed by a first base station, comprising:
sending (S101) a first capability information to a second base station, wherein the first capability information is configured to indicate a capability of solving a multi-card communication conflict problem in a terminal by at least one of the first base station or a neighboring base station of the first base station.

2. The method according to claim 1, wherein, in response to the capability of solving the multi-card communication conflict problem in the terminal comprising being able to solve the multi-card communication conflict problem in the terminal, the first capability information is further configured to indicate a manner to solve the multi-card communication conflict problem in the terminal by at least one of the first base station or the neighboring base station of the first base station;
wherein the manner comprises at least one of:
changing a user equipment identifier of a subscriber identity module, SIM, card;
providing an offset corresponding to the user equipment identifier of the SIM card;
changing an algorithm for determining a paging occasion based on the user equipment identifier of the SIM card;
providing a paging reason; or
allowing the SIM card to be temporarily disconnected.

3. The method according to claim 1, wherein, in response to the capability of solving the multi-card communication conflict problem in the terminal comprising being able to solve the multi-card communication conflict problem in the terminal, the first capability information is further configured to indicate a type of the multi-card communication conflict problem in the terminal which can be solved by at least one of the first base station or the neighboring base station of the first base station;
wherein the type comprises at least one of:
a conflict between a first SIM card monitoring a paging message and a second SIM card monitoring a paging message in the terminal;
a conflict between a first SIM card performing a communication operation and a second SIM card monitoring a paging message in the terminal;
a conflict between a first SIM card performing a communication operation and a second SIM card responding to a paging message in the terminal;
a conflict between a first SIM card performing a communication operation and a second SIM card measuring a signal in the terminal;
a conflict between a first SIM card performing a communication operation and a second SIM card receiving system information in the terminal; or
a conflict between a first SIM card performing a communication operation and a second SIM card updating a tracking area in the terminal.

4. The method according to any one of claims 1 to 3, wherein sending (S101) the first capability information to the second base station comprises at least one of:
sending (S201) the first capability information to the second base station by carrying the first capability information in a setup request signaling for an inter base station interface; or
sending (S601) the first capability information to the second base station in response to receiving a request for acquiring the first capability information from the second base station.

5. The method according to any one of claims 1 to 4, further comprising:
receiving (S301) second capability information sent by the second base station; and
determining (S302) a capability of solving the multi-card communication conflict problem in the terminal by at least one of the second base station or a neighboring base station of the second base station based on the second capability information;
wherein, the receiving (S301) the second capability information sent by the second base station comprises:
receiving (S401) a setup response signaling for an inter base station interface sent by the second base station, wherein the second capability information is carried in the setup response signaling.

6. The method according to any one of claims 1 to 5, further comprising:
in response to updating of the first capability information, sending (S501) updated first capability information to the second base station through an inter base station interface with the second base station.

7. A method for receiving a capability, performed by a second base station, comprising:
receiving (S701) first capability information sent by a first base station; and
determining (S702) a capability of solving a multi-card communication conflict problem in a terminal by at least one of the first base station or a neighboring base station of the first base station based on the first capability information;
wherein the first capability information is configured to indicate a capability of solving a multi-card communication conflict problem in a terminal by at least one of the first base station or a neighboring base station of the first base station.

8. The method according to claim 7, wherein, in response to the capability of solving the multi-card communication conflict problem in the terminal comprising being able to solve the multi-card communication conflict problem in the terminal, the method further comprises:
determining a manner to solve the multi-card communication conflict problem in the terminal by at least one of the first base station or the neighboring base station of the first base station based on the first capability information;
wherein the manner comprises at least one of:
changing a terminal identifier of a subscriber identity module (SIM) card;
providing an offset corresponding to the terminal identifier of the SIM card;
changing an algorithm for determining a paging occasion based on the terminal identifier of the SIM card;
providing a paging reason; or
allowing the SIM card to be temporarily disconnected.

9. The method according to claim 7, wherein, in response to the capability of solving the multi-card communication conflict problem in the terminal comprising being able to solve the multi-card communication conflict problem in the terminal, the method further comprises:
determining a type of the multi-card communication conflict problem in the terminal which can be solved by at least one of the first base station or the neighboring base station of the first base station based on the first capability information;
wherein the type comprises at least one of:
a conflict between a first SIM card monitoring a paging message and a second SIM card monitoring a paging message in the terminal;
a conflict between a first SIM card performing a communication operation and the second SIM card monitoring a paging message in the terminal;
a conflict between the first SIM card performing a communication operation and a second SIM card responding to a paging message in the terminal;
a conflict between the first SIM card performing a communication operation and a second SIM card measuring a signal in the terminal;
a conflict between the first SIM card performing a communication operation and a second SIM card receiving system information in the terminal; or
a conflict between the first SIM card performing a communication operation and a second SIM card updating a tracking area in the terminal.

10. The method according to any one of claims 7 to 9, wherein receiving (S701) the first capability information sent by the first base station comprises:
receiving (S801) a setup request signaling for an inter base station interface sent by the first base station, wherein the first capability information is carried in the setup request signaling;
optionally, the method further comprises:
setting up the inter base station interface with the first base station and/or the neighboring base station in response to determining that the capability is a target capability.

11. The method according to any one of claims 7 to 10, further comprising:
sending (S901) second capability information to the first base station, wherein the second capability information is configured to indicate a capability of solving the multi-card communication conflict problem in the terminal by the second base station and/or a neighboring base station of the second base station; and
the sending (S901) the second capability information to the first base station comprises:
sending (S1001) a setup response signaling for an inter base station interface to the first base station, wherein the second capability information is carried in the setup response signaling.

12. The method according to any one of claims 7 to 11, further comprising:
receiving (S1101) updated first capability information sent by the first base station through an inter base station interface with the first base station.

13. A first base station, comprising:
a capability sending module, configured to send a first capability information to a second base station, wherein, the first capability information is configured to indicate a capability of solving a multi-card communication conflict problem in a terminal by the first base station and/or a neighboring base station of the first base station.

14. A second base station, comprising:
a capability reception module, configured to receive first capability information sent by a first base station; and
a capability determination module, configured to determine a capability of solving a multi-card communication conflict problem in a terminal by at least one of the first base station or a neighboring base station of the first base station based on the first capability information;
wherein the first capability information is configured to indicate a capability of solving a multi-card communication conflict problem in a terminal by at least one of the first base station or a neighboring base station of the first base station.

## Patentansprüche

1. Verfahren zum Senden einer Fähigkeit, ausgeführt durch eine erste Basisstation, umfassend:
Senden (S101) einer ersten Fähigkeitsinformation an eine zweite Basisstation, wobei die erste Fähigkeitsinformation dazu eingerichtet ist, eine Fähigkeit zum Lösen eines Mehrkarten-Kommunikationskonfliktproblems in einem Endgerät durch zumindest eine der ersten Basisstation oder einer benachbarten Basisstation der ersten Basisstation anzuzeigen.

2. Verfahren nach Anspruch 1, wobei, als Reaktion auf die Fähigkeit zum Lösen des Mehrkarten-Kommunikationskonfliktproblems in dem Endgerät, umfassend, dass das Mehrkarten-Kommunikationskonfliktproblem in dem Endgerät gelöst werden kann, die erste Fähigkeitsinformation ferner dazu eingerichtet ist, eine Art und Weise zum Lösen des Mehrkarten-Kommunikationskonfliktproblems in dem Endgerät durch zumindest eine der ersten Basisstation oder der benachbarten Basisstation der ersten Basisstation anzuzeigen;
wobei die Art und Weise zumindest eine der folgenden umfasst:
Ändern einer Teilnehmergerätekennung einer Teilnehmeridentitätsmodul-, SIM-, Karte;
Bereitstellen eines Offsets, der der Teilnehmergerätekennung der SIM-Karte entspricht;
Ändern eines Algorithmus zur Bestimmung einer Rufaufrufgelegenheit basierend auf der Teilnehmergerätekennung der SIM-Karte;
Bereitstellen eines Rufaufrufgrundes; oder
Erlauben, dass die SIM-Karte vorübergehend getrennt wird.

3. Verfahren nach Anspruch 1, wobei, als Reaktion auf die Fähigkeit zum Lösen des Mehrkarten-Kommunikationskonfliktproblems in dem Endgerät, umfassend, dass das Mehrkarten-Kommunikationskonfliktproblem in dem Endgerät gelöst werden kann, die erste Fähigkeitsinformation ferner dazu eingerichtet ist, eine Art des Mehrkarten-Kommunikationskonfliktproblems in dem Endgerät anzuzeigen, das durch zumindest eine der ersten Basisstation oder der benachbarten Basisstation der ersten Basisstation gelöst werden kann;
wobei die Art zumindest eine der folgenden umfasst:
einen Konflikt zwischen einer ersten SIM-Karte, die eine Rufaufrufnachricht überwacht, und einer zweiten SIM-Karte, die eine Rufaufrufnachricht in dem Endgerät überwacht;
einen Konflikt zwischen einer ersten SIM-Karte, die eine Kommunikationsoperation ausführt, und einer zweiten SIM-Karte, die eine Rufaufrufnachricht in dem Endgerät überwacht;
einen Konflikt zwischen einer ersten SIM-Karte, die eine Kommunikationsoperation ausführt, und einer zweiten SIM-Karte, die auf eine Rufaufrufnachricht in dem Endgerät antwortet;
einen Konflikt zwischen einer ersten SIM-Karte, die eine Kommunikationsoperation ausführt, und einer zweiten SIM-Karte, die ein Signal in dem Endgerät misst;
einen Konflikt zwischen einer ersten SIM-Karte, die eine Kommunikationsoperation ausführt, und einer zweiten SIM-Karte, die Systeminformationen in dem Endgerät empfängt; oder
einen Konflikt zwischen einer ersten SIM-Karte, die eine Kommunikationsoperation ausführt, und einer zweiten SIM-Karte, die ein Tracking-Bereich in dem Endgerät aktualisiert.

4. Verfahren nach einem der Ansprüche 1 bis 3, wobei das Senden (S101) der ersten Fähigkeitsinformation an die zweite Basisstation zumindest eines der folgenden umfasst:
Senden (S201) der ersten Fähigkeitsinformation an die zweite Basisstation durch Tragen der ersten Fähigkeitsinformation in einem Einrichtungsanforderungssignal für eine Schnittstelle zwischen Basisstationen; oder
Senden (S601) der ersten Fähigkeitsinformation an die zweite Basisstation als Reaktion auf den Empfang einer Anforderung zum Abrufen der ersten Fähigkeitsinformation von der zweiten Basisstation.

5. Verfahren nach einem der Ansprüche 1 bis 4, ferner umfassend:
Empfangen (S301) einer zweiten Fähigkeitsinformation, die von der zweiten Basisstation gesendet wird; und
Bestimmen (S302) einer Fähigkeit zum Lösen des Mehrkarten-Kommunikationskonfliktproblems in dem Endgerät durch zumindest eine der zweiten Basisstation oder einer benachbarten Basisstation der zweiten Basisstation basierend auf der zweiten Fähigkeitsinformation;
wobei das Empfangen (S301) der von der zweiten Basisstation gesendeten zweiten Fähigkeitsinformation umfasst:
Empfangen (S401) eines Einrichtungsantwortsignals für eine Schnittstelle zwischen Basisstationen, das von der zweiten Basisstation gesendet wird, wobei die zweite Fähigkeitsinformation in dem Einrichtungsantwortsignal übertragen wird.

6. Verfahren nach einem der Ansprüche 1 bis 5, ferner umfassend:
als Reaktion auf die Aktualisierung der ersten Fähigkeitsinformation, Senden (S501) einer aktualisierten ersten Fähigkeitsinformation an die zweite Basisstation über eine Schnittstelle zwischen Basisstationen mit der zweiten Basisstation.

7. Verfahren zum Empfangen einer Fähigkeit, ausgeführt durch eine zweite Basisstation, umfassend:
Empfangen (S701) einer von einer ersten Basisstation gesendeten ersten Fähigkeitsinformation; und
Bestimmen (S702) einer Fähigkeit zum Lösen eines Mehrkarten-Kommunikationskonfliktproblems in einem Endgerät durch zumindest eine der ersten Basisstation oder einer benachbarten Basisstation der ersten Basisstation basierend auf der ersten Fähigkeitsinformation;
wobei die erste Fähigkeitsinformation dazu eingerichtet ist, eine Fähigkeit zum Lösen eines Mehrkarten-Kommunikationskonfliktproblems in einem Endgerät durch zumindest eine der ersten Basisstation oder einer benachbarten Basisstation der ersten Basisstation anzuzeigen.

8. Verfahren nach Anspruch 7, wobei, als Reaktion auf die Fähigkeit zum Lösen des Mehrkarten-Kommunikationskonfliktproblems in dem Endgerät, umfassend, dass das Mehrkarten-Kommunikationskonfliktproblem in dem Endgerät gelöst werden kann, das Verfahren ferner umfasst:
Bestimmen einer Art und Weise zum Lösen des Mehrkarten-Kommunikationskonfliktproblems in dem Endgerät durch zumindest eine der ersten Basisstation oder der benachbarten Basisstation der ersten Basisstation basierend auf der ersten Fähigkeitsinformation;
wobei die Art und Weise zumindest eine der folgenden umfasst:
Ändern einer Endgerätekennung einer Teilnehmeridentitätsmodul- (SIM-) Karte;
Bereitstellen eines Offsets, der der Endgerätekennung der SIM-Karte entspricht;
Ändern eines Algorithmus zur Bestimmung einer Rufaufrufgelegenheit basierend auf der Endgerätekennung der SIM-Karte;
Bereitstellen eines Rufaufrufgrundes; oder
Erlauben, dass die SIM-Karte vorübergehend getrennt wird.

9. Verfahren nach Anspruch 7, wobei, als Reaktion auf die Fähigkeit zum Lösen des Mehrkarten-Kommunikationskonfliktproblems in dem Endgerät, umfassend, dass das Mehrkarten-Kommunikationskonfliktproblem in dem Endgerät gelöst werden kann, das Verfahren ferner umfasst:
Bestimmen einer Art des Mehrkarten-Kommunikationskonfliktproblems in dem Endgerät, das durch zumindest eine der ersten Basisstation oder der benachbarten Basisstation der ersten Basisstation basierend auf der ersten Fähigkeitsinformation gelöst werden kann;
wobei die Art zumindest eine der folgenden umfasst:
einen Konflikt zwischen einer ersten SIM-Karte, die eine Rufaufrufnachricht überwacht, und einer zweiten SIM-Karte, die eine Rufaufrufnachricht in dem Endgerät überwacht;
einen Konflikt zwischen einer ersten SIM-Karte, die eine Kommunikationsoperation ausführt, und der zweiten SIM-Karte, die eine Rufaufrufnachricht in dem Endgerät überwacht;
einen Konflikt zwischen der ersten SIM-Karte, die eine Kommunikationsoperation ausführt, und einer zweiten SIM-Karte, die auf eine Rufaufrufnachricht in dem Endgerät antwortet;
einen Konflikt zwischen der ersten SIM-Karte, die eine Kommunikationsoperation ausführt, und einer zweiten SIM-Karte, die ein Signal in dem Endgerät misst;
einen Konflikt zwischen der ersten SIM-Karte, die eine Kommunikationsoperation ausführt, und einer zweiten SIM-Karte, die Systeminformationen in dem Endgerät empfängt; oder
einen Konflikt zwischen der ersten SIM-Karte, die eine Kommunikationsoperation ausführt, und einer zweiten SIM-Karte, die einen Tracking-Bereich in dem Endgerät aktualisiert.

10. Verfahren nach einem der Ansprüche 7 bis 9, wobei das Empfangen (S701) der von der ersten Basisstation gesendeten ersten Fähigkeitsinformation umfasst:
Empfangen (S801) eines Einrichtungsanforderungssignals für eine Schnittstelle zwischen Basisstationen, das von der ersten Basisstation gesendet wird, wobei die erste Fähigkeitsinformation in dem Einrichtungsanforderungssignal übertragen wird;
optional umfasst das Verfahren ferner:
Einrichten der Schnittstelle zwischen Basisstationen mit der ersten Basisstation und/oder der benachbarten Basisstation als Reaktion auf die Bestimmung, dass die Fähigkeit eine Ziel-Fähigkeit ist.

11. Verfahren nach einem der Ansprüche 7 bis 10, ferner umfassend:
Senden (S901) einer zweiten Fähigkeitsinformation an die erste Basisstation, wobei die zweite Fähigkeitsinformation dazu eingerichtet ist, eine Fähigkeit zum Lösen des Mehrkarten-Kommunikationskonfliktproblems in dem Endgerät durch die zweite Basisstation und/oder eine benachbarte Basisstation der zweiten Basisstation anzuzeigen; und
das Senden (S901) der zweiten Fähigkeitsinformation an die erste Basisstation umfasst:
Senden (S1001) eines Einrichtungsantwortsignals für eine Schnittstelle zwischen Basisstationen an die erste Basisstation, wobei die zweite Fähigkeitsinformation in dem Einrichtungsantwortsignal übertragen wird.

12. Verfahren nach einem der Ansprüche 7 bis 11, ferner umfassend:
Empfangen (S1101) einer aktualisierten ersten Fähigkeitsinformation, die von der ersten Basisstation über eine Schnittstelle zwischen Basisstationen mit der ersten Basisstation gesendet wird.

13. Erste Basisstation, umfassend:
ein Fähigkeitssendmodul, eingerichtet zum Senden einer ersten Fähigkeitsinformation an eine zweite Basisstation, wobei die erste Fähigkeitsinformation dazu eingerichtet ist, eine Fähigkeit zum Lösen eines Mehrkarten-Kommunikationskonfliktproblems in einem Endgerät durch die erste Basisstation und/oder eine benachbarte Basisstation der ersten Basisstation anzuzeigen.

14. Zweite Basisstation, umfassend:
ein Fähigkeits-Empfangsmodul, eingerichtet zum Empfangen einer von einer ersten Basisstation gesendeten ersten Fähigkeitsinformation; und
ein Fähigkeitsbestimmungsmodul, eingerichtet zum Bestimmen einer Fähigkeit zum Lösen eines Mehrkarten-Kommunikationskonfliktproblems in einem Endgerät durch zumindest eine der ersten Basisstation oder einer benachbarten Basisstation der ersten Basisstation basierend auf der ersten Fähigkeitsinformation;
wobei die erste Fähigkeitsinformation dazu eingerichtet ist, eine Fähigkeit zum Lösen eines Mehrkarten-Kommunikationskonfliktproblems in einem Endgerät durch zumindest eine der ersten Basisstation oder einer benachbarten Basisstation der ersten Basisstation anzuzeigen.

## Revendications

1. Procédé d'envoi d'une capacité, exécuté par une première station de base, comprenant:
l'envoi (S101) de premières informations de capacité à une deuxième station de base, les premières informations de capacité étant configurées pour indiquer une capacité de résoluton d'un problème de conflit de communication multicarte dans un terminal par au moins l'une parmi la première station de base ou une station de base voisine de la première station de base.

2. Procédé selon la revendication 1, dans lequel en réponse à la capacité de résoudre le problème de conflit de communication multicarte dans le terminal, qui comprend la capacité de résoudre le problème de conflit de communication multicarte dans le terminal, les premières informations de capacité sont en outre configurées pour indiquer une manière de résoudre le problème de conflit de communication multicarte dans le terminal par au moins l'une parmi la première station de base ou la station de base voisine de la première station de base;
dans lequel la manière consiste au moins à:
changer un identifiant d'équipement d'utilisateur d'une carte de module d'identité d'abonné, SIM;
fournir un décalage correspondant à l'identifiant utilisateur de la carte SIM;
changer un algorithme pour déterminer une occasion de recherche en fonction de l'identifiant d'équipement utilisateur de la carte SIM;
fournir un motif de recherche; ou
permettre la déconnexion temporaire de la carte SIM.

3. Procédé selon la revendication 1, dans lequel en réponse à la capacité de résoudre le problème de conflit de communication multicarte dans le terminal, qui comprend la capacité de résoudre le problème de conflit de communication multicarte dans le terminal, les premières informations de capacité sont en outre configurées pour indiquer un type de problème de conflit de communication multicarte dans le terminal qui peut être résolu par au moins l'une parmi la première station de base ou la station de base voisine de la première station de base;
dans lequel le type comprend au moins l'un parmi:
un conflit entre une première carte SIM surveillant un message de recherche et une deuxième carte SIM surveillant un message de recherche dans le terminal;
un conflit entre une première carte SIM effectuant une opération de communication et une deuxième carte SIM surveillant un message de recherche dans le terminal;
un conflit entre une première carte SIM effectuant une opération de communication et une deuxième carte SIM répondant à un message de recherche dans le terminal;
un conflit entre une première carte SIM effectuant une opération de communication et une deuxième carte SIM mesurant un signal dans le terminal;
un conflit entre une première carte SIM effectuant une opération de communication et une deuxième carte SIM recevant des informations système dans le terminal;
un conflit entre une première carte SIM effectuant une opération de communication et une deuxième carte SIM mettant à jour une zone de suivi dans le terminal;

4. Procédé selon l'une quelconque des revendications 1 à 3, dans lequel l'envoi (S101) des premières informations de capacité à la deuxième station de base consiste au moins à:
envoyer (S201) les premières informations de capacité à la deuxième station de base en transportant les premières informations de capacité dans une signalisation de demande de configuration pour une interface inter-station de base; ou
envoyer (S601) les premières informations de capacité à la deuxième station de base en réponse à la réception d'une demande d'acquisition des premières informations de capacité provenant de la deuxième station de base.

5. Procédé selon l'une quelconque des revendications 1 à 4, comprenant en outre:
la réception (S301) de deuxièmes informations de capacité envoyées par la deuxième station de base; et
la détermination (S302) de la capacité de résoudre le problème de conflit de communication multicarte dans le terminal par au moins l'une parmi la deuxième station de base ou une station de base voisine de la deuxième station de base, en fonction des deuxièmes informations de capacité;
dans lequel la réception (S301) des deuxièmes informations de capacité envoyée par la deuxième station de base consiste à:
recevoir (S401) une signalisation de réponse de configuration pour une interface inter-station de base envoyée par la deuxième station de base, la deuxième information de capacité étant transmise dans la signalisation de réponse de configuration.

6. Procédé selon l'une quelconque des revendications 1 à 5, comprenant en outre:
en réponse à la mise à jour des premières informations de capacité, l'envoi (S501) des premières informations de capacité mises à jour à la deuxième station de base par l'intermédiaire d'une interface inter-station de base avec la deuxième station de base.

7. Procédé de réception d'une capacité, exécuté par une deuxième station de base, comprenant:
la réception (S701) de premières informations de capacité envoyées par une première station de base; et
la détermination (S702) de la capacité de résoudre un problème de conflit de communication multicarte dans un terminal par au moins l'une parmi la première station de base ou une station de base voisine de la première station de base, en fonction des premières informations de capacité;
dans lequel les premières informations de capacité étant configurées pour indiquer une capacité de résolution d'un problème de conflit de communication multicarte dans un terminal par au moins l'une parmi la première station de base ou une station de base voisine de la première station de base.

8. Procédé selon la revendication 7, dans lequel, en réponse à la capacité de résoudre le problème de conflit de communication multicarte dans le terminal, qui consiste à pouvoir résoudre le problème de conflit de communication multicarte dans le terminal, le procédé comprend en outre:
la détermination d'une manière de résoudre le problème de conflit de communication multicarte dans le terminal par au moins l'une parmi la première station de base ou la station de base voisine de la première station de base, en fonction des premières informations de capacité;
dans lequel la manière consiste au moins à:
changer un identifiant de terminal d'une carte de module d'identité d'abonné (SIM);
fournir un décalage correspondant à l'identifiant de terminal de la carte SIM;
changer un algorithme pour déterminer une occasion de recherche en fonction de l'identifiant de terminal de la carte SIM;
fournir un motif de recherche; ou
permettre la déconnexion temporaire de la carte SIM.

9. Procédé selon la revendication 7, dans lequel, en réponse à la capacité de résoudre le problème de conflit de communication multicarte dans le terminal, qui consiste à pouvoir résoudre le problème de conflit de communication multicarte dans le terminal, le procédé comprend en outre:
déterminer un type de problème de conflit de communication multicarte dans le terminal qui peut être résolu par au moins l'une parmi la première station de base ou la station de base voisine de la première station de base en fonction des premières informations de capacité;
dans lequel le type comprend au moins l'un parmi:
un conflit entre une première carte SIM surveillant un message de recherche et une deuxième carte SIM surveillant un message de recherche dans le terminal;
un conflit entre une première carte SIM effectuant une opération de communication et la deuxième carte SIM surveillant un message de recherche dans le terminal;
un conflit entre la première carte SIM effectuant une opération de communication et une deuxième carte SIM répondant à un message de recherche dans le terminal;
un conflit entre la première carte SIM effectuant une opération de communication et une deuxième carte SIM mesurant un signal dans le terminal;
un conflit entre la première carte SIM effectuant une opération de communication et une deuxième carte SIM recevant des informations système dans le terminal; ou
un conflit entre la première carte SIM effectuant une opération de communication et une deuxième carte SIM mettant à jour une zone de suivi dans le terminal.

10. Procédé selon l'une quelconque des revendications 7 à 9, dans lequel la réception (S701) des premières informations de capacité envoyées par la première station de base comprend:
la réception (S801) d'une signalisation de demande de configuration pour une interface inter-station de base envoyée par la première station de base, les premières informations de capacité étant transmises dans la signalisation de demande de configuration;
éventuellement, le procédé comprend en outre:
la configuration de l'interface inter-station de base avec la première station de base et/ou la station de base voisine en réponse à la détermination que la capacité est une capacité cible.

11. Procédé selon l'une quelconque des revendications 7 à 10, comprenant en outre:
l'envoi (S901) de deuxièmes informations de capacité à une première station de base, les deuxièmes informations de capacité étant configurées pour indiquer une capacité de résolution d'un problème de conflit de communication multicarte dans un terminal par la deuxième station de base et/ou une station de base voisine de la deuxième station de base; et
l'envoi (S901) des deuxièmes informations de capacité à la première station de base consiste à:
envoyer (S1001) une signalisation de réponse de configuration pour une interface inter-station de base à la première station de base, les deuxièmes informations de capacité étant transmises dans la signalisation de réponse de configuration.

12. Procédé selon l'une quelconque des revendications 7 à 11, comprenant en outre:
la réception (S1101) des premières informations de capacité mises à jour envoyées par la première station de base par l'intermédiaire d'une interface inter-station de base avec la première station de base.

13. Première station de base, comprenant:
un module d'envoi de capacité, configuré pour envoyer les premières informations de capacité à une deuxième station de base, les premières informations de capacité étant configurées pour indiquer une capacité de résolution d'un problème de conflit de communication multicarte dans un terminal par la première station de base et/ou une station de base voisine de la première station de base.

14. Deuxième station de base, comprenant:
un module de réception de capacité, configuré pour recevoir les premières informations de capacité envoyées par une première station de base; et
un module de détermination de capacité, configuré pour déterminer une capacité à résoudre un problème de conflit de communication multicarte dans un terminal par au moins l'une parmi la première station de base ou une station de base voisine de la première station de base, en fonction des premières informations de capacité;
dans lequel les premières informations de capacité étant configurées pour indiquer une capacité de résolution d'un problème de conflit de communication multicarte dans un terminal par au moins l'une parmi la première station de base ou une station de base voisine de la première station de base.
